(19) Europäisches Patentamt
European Patent Office
Office européen des brevets

(11) **EP 4 598 244 A1**

(12) **EUROPEAN PATENT APPLICATION**
published in accordance with Art. 153(4) EPC

(43) Date of publication:
**06.08.2025 Bulletin 2025/32**

(21) Application number: **23871643.5**

(22) Date of filing: **29.08.2023**

(51) International Patent Classification (IPC):
***H04W 74/08*** (2024.01) ***H04W 16/28*** (2009.01)
***H04W 56/00*** (2009.01) ***H04W 64/00*** (2009.01)
***H04W 72/02*** (2009.01) ***H04W 72/21*** (2023.01)

(52) Cooperative Patent Classification (CPC):
**H04W 16/28; H04W 56/00; H04W 64/00; H04W 72/02; H04W 72/21; H04W 74/08**

(86) International application number:
**PCT/JP2023/031142**

(87) International publication number:
**WO 2024/070402 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022158612**

(71) Applicant: **Panasonic Intellectual Property Corporation of America**
**Torrance, CA 90504 (US)**

(72) Inventors:
- **NISHIO, Akihiko**
**Kadoma-shi, Osaka 571-0057 (JP)**
- **SUZUKI, Hidetoshi**
**Kadoma-shi, Osaka 571-0057 (JP)**
- **YAMAMOTO, Tetsuya**
**Kadoma-shi, Osaka 571-0057 (JP)**

(74) Representative: **Grünecker Patent- und Rechtsanwälte PartG mbB**
**Leopoldstraße 4**
**80802 München (DE)**

(54) **TERMINAL, BASE STATION, COMMUNICATION METHOD, AND INTEGRATED CIRCUIT**

(57) This terminal comprises: a control circuit that determines the resource of an uplink channel on the basis of information related to the position of the terminal; and a transmission circuit that uses the resource to transmit an uplink channel signal.

200

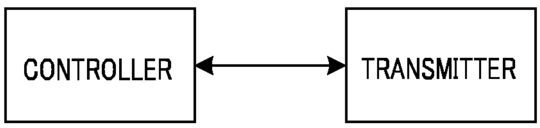


FIG. 3



Processed by Luminess, 75001 PARIS (FR)

## Description

Technical Field

The present disclosure relates to a terminal, a base station, a communication method, and an integrated circuit.

Background Art

In the standardization of 5G, New Radio access technology (NR) has been specified in 3GPP, and specification of Release 15 (Rel. 15) of NR has been published.

Citation List

Non Patent Literature

NPL 1
3GPP, TR 38.821, V16.1.0 "Solutions for NR to support non-terrestrial networks (NTN) (Release 16)"
NPL 2
3GPP, TS 38.321, V17.2.0 "NR; Medium Access Control (MAC) protocol specification (Release 17)"

Summary of Invention

However, there is room for study on a method for improving the received quality of a signal.
One non-limiting and exemplary embodiment of the present disclosure facilitates providing a terminal, a base station, a communication method, and an integrated circuit each capable of improving the received quality of a signal.
A terminal according to an exemplary embodiment of the present disclosure includes: control circuitry, which, in operation, determines a resource for an uplink channel based on information on a location of the terminal; and transmission circuitry, which, in operation, transmits a signal for the uplink channel using the resource.
It should be noted that general or specific embodiments may be implemented as a system, an apparatus, a method, an integrated circuit, a computer program, a storage medium, or any selective combination thereof.
According to an embodiment of the present disclosure, it is possible to improve the received quality of a signal.
Additional benefits and advantages of the disclosed aspects will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an exemplary 4-step random access procedure;
FIG. 2 is a block diagram illustrating an exemplary configuration of a part of a base station;
FIG. 3 is a block diagram illustrating an exemplary configuration of a part of a terminal;
FIG. 4 is a block diagram illustrating an exemplary configuration of the base station;
FIG. 5 is a block diagram illustrating an exemplary configuration of the terminal;
FIG. 6 is flowcharts describing exemplary operations of the base station and the terminal;
FIG. 7 illustrates an example of mapping between a Physical Random Access Channel (PRACH) sequence or a RACH Occasion (RO) and a distance;
FIG. 8 illustrates configuration examples of a PRACH resource;
FIG. 9 illustrates SSB beams and a configuration example of the PRACH resource;
FIG. 10 illustrates an exemplary architecture of a 3GPP NR system;
FIG. 11 is a schematic view illustrating functional split between NG-RAN and 5GC;
FIG. 12 is a sequence diagram of procedures for a setup/reconfiguration of radio resource control (RRC) connection;
FIG. 13 is a schematic diagram illustrating usage scenarios of enhanced mobile broadband (eMBB), massive machine type communications (mMTC), and ultra reliable and low latency communications (URLLC); and
FIG. 14 is a block diagram illustrating an exemplary 5G system architecture for a non-roaming scenario.

## Description of Embodiments

Hereinafter, embodiments of the present disclosure will be described in detail with reference to the accompanying drawings.

### [Regarding Non-Terrestrial Network (NTN)]

NR Rel. 15 has been specified as a radio access technology for terrestrial networks. Meanwhile, an extension of NR to a non-terrestrial network (NTN) such as communication using a satellite and/or a high-altitude platform station (HAPS) has been studied (e.g., NPL 1).

In the NTN environment, a coverage area (e.g., one or more cells) of a satellite for a terminal (may be also referred to as, e.g., user equipment (UE)) on the ground or a terminal located in airspace, such as an aircraft or drone, is formed by a beam from the satellite (may be also referred to as, e.g., satellite beam). In addition, a round trip time (RTT) of radio wave propagation between the terminal and the satellite is determined depending on the altitude of the satellite (e.g., approximately up to 36000 km) and the angle viewed from the terminal, that is, the locational relationship between the satellite and the terminal.

For example, NPL 1 mentions that the round trip time (RTT) of radio wave propagation between a base station and a terminal takes up to approximately 540 ms in NTN.

Further, NPL 1 mentions that, in NTN, a differential delay up to approximately 10 ms (e.g., difference between farthest location and closest location from satellite in beam) arises in accordance with a location of a terminal in a beam (or coverage area or cell).

In addition, for example, in the case of a non-geostationary satellite such as a low-earth orbit satellite (LEO), the amount of a propagation delay varies more rapidly than in the terrestrial network because the satellite moves at a high speed of approximately 7.6 km per second. Further, in NTN, a high Doppler shift (or frequency shift) occurs due to the high-speed movement of the satellite, as compared to a terrestrial network.

### [Initial Access]

In 5G NR, a terminal performs transmission using a random access channel (for example, PRACH: Physical Random Access Channel) for initial access or a data transmission request.

A random access procedure may be performed, for example, in a 4-step random access (for example, also referred to as 4-step RACH or Type-1 random access procedure). FIG. 1 illustrates an exemplary procedure of the 4-step random access.

As illustrated in FIG. 1, the terminal transmits PRACH as a first step transmission (also referred to as Message 1, Msg.1, or Msg1). PRACH is also referred to as a "preamble." The transmission of Msg.1 may be performed, for example, at a transmission timing (for example, slot timing) indicated in advance for each cell from a base station (also referred to as gNB).

Next, after receiving and decoding Msg.1, the base station indicates a response to PRACH (for example, RA response or Random Access Response (RAR)) and scheduling information including an uplink transmission timing of Msg.3 to the terminal, as a second step transmission (also referred to as Message 2, Msg.2, or Msg2).

Next, the terminal indicates information to be used for Connection establishment, and the like to the base station using the scheduling information indicated in Msg.2, as a third step transmission (also referred to as Message 3, Msg.3, or Msg3). An uplink data channel used for transmission of Msg.3 (for example, PUSCH: Physical Uplink Shared Channel) is also referred to as "Msg.3 PUSCH."

Finally, the base station indicates a Connection establishment response and the like to the terminal through a downlink data channel (for example, PDSCH: Physical Downlink Shared Channel), as a fourth step transmission (also referred to as Message 4, Msg.4, or Msg4). Time and frequency resources for PDSCH used for transmission of Msg.4 (for example, also referred to as "Msg.4 PDSCH") are indicated to the terminal from the base station through a downlink control channel (for example, PDCCH: Physical Downlink Control Channel (or, downlink control information (DCI))) before the PDSCH transmission.

For example, PRACH for the 4-step random access (Msg.1 in FIG. 1) may be configured with a Cyclic prefix (CP), a Preamble sequence, and a guard period (GP). A Preamble sequence may be, for example, a Cyclic-shifted Zadoff-Chu (CS-ZC) sequence (a sequence obtained by cyclically shifting ZC sequence) with a good correlation performance, the CP may be a copy of a part of the Preamble sequence, and the GP is a non-transmission interval.

For example, a different CS-ZC sequence may be uniquely associated with each number of the Preamble sequence (for example, also referred to as Preamble number or PRACH number), and may be indicated to the terminal as cell information of the base station. The terminal transmits, as PRACH, the CS-ZC sequence corresponding to a Preamble number randomly selected from a plurality of Preamble sequences. Even in a case where a plurality of terminals transmits PRACH with the same time and frequency resources, the base station can detect a plurality of Preamble numbers simultaneously by correlation detection of the CS-ZC sequences as long as the plurality of terminals selects different Preamble numbers.

(Timing Control and Frequency Control)

In NR, for example, in order to align reception timings at a base station of signals transmitted from terminals, each of the terminal performs timing control (e.g., timing adjustment) that is based on information (e.g., referred to as "Timing Advance (TA) command") indicated (notified) by the base station for correcting (adjusting) a timing.

In NTN, since the amount of the propagation delay varies more rapidly than in the terrestrial network as described above, a terminal calculates the round-trip delay time between the terminal and a base station, corrects the timing, and thereby transmits a signal.

Delay time of a radio link between a terminal and a satellite (e.g., referred to as "service link") may be calculated based on, for example, location information on the terminal and information on an orbit or a location of the satellite. Note that the location information on the terminal may be acquired by, for example, a Global Navigation Satellite System (GNSS) or the like at the terminal. Further, the information on the orbit or location of the satellite may be indicated (e.g., broadcast) from a base station to the terminal as "satellite ephemeris information (may be also referred to as "satellite ephemeris")," for example.

Meanwhile, delay time of a radio link between a base station or a gateway (GW) on the ground and a satellite (e.g., referred to as "feeder link") may be calculated, at the terminal, based on a common TA parameter broadcast from the base station, for example.

The delay time of the feeder link varies as the satellite moves, so that information on the amount of variation in the delay time, such as a common TA drift and the amount of variation in the common TA drift (common TA drift variation) may be indicated to the terminal as the common TA parameter, in addition to the delay time of the feeder link at a certain point, for example.

For example, the terminal may determine a value, $T_{TA}$, to be used for the timing adjustment based on Equation 1:

$$T_{TA} = \left(N_{TA} + N_{TA,offset} + N_{TA,adj}^{common} + N_{TA,adj}^{UE}\right)T_c \qquad \ldots \text{(Equation 1).}$$

In Equation 1, $N_{TA}$ denotes, for example, a TA value indicated by a TA command, $N_{TAoffset}$ denotes an offset for the TA value, and $T_c$ denotes a reference time (for example, a basic time unit). Further, in Equation 1, $N_{TA,adj}{}^{common}$ denotes a common TA value based on the feeder link delay time calculated from the common TA parameter, and $N_{TA,adj}{}^{UE}$ denotes an UE-specific TA value based on the service link delay time estimated from the location information of the terminal and the satellite location. The first term and the second term of Equation 1 are defined, for example, in 5G NR standards TS 38.211 and are the same as in the Rel. 15 NR specification, and the value of $T_{TA}$ in Equation 1 is a value obtained by adding the common TA value ($N_{TA,adj}{}^{common}$) and the UE-specific TA value ($N_{TA,adj}{}^{UE}$) to the values of the first term and the second term.

As described above, in NTN, the round trip delay time of the service link and the feeder link are corrected (e.g., compensated) on a side of the terminal, and an uplink signal is thus transmitted. This allows the signal transmitted from each terminal to be received within a predetermined time-difference at the base station.

Further, in NTN, a high Doppler shift may occur due to the high-speed movement of the satellite. The Doppler shift varies depending on the terminal location and changes from moment to moment, which may make it difficult to receive signals from a plurality of terminals at the base station. For this reason, the terminal may transmit a signal at a frequency that has been pre-compensated for the Doppler shift of the service link. Since the Doppler shift is determined based on, for example, the satellite location, the satellite velocity, and the terminal location, the terminal may calculate the Doppler shift compensation amount based on the satellite ephemeris information and the location information of the terminal.

The timing control and frequency control have been each described, thus far.

In NTN, since the transmission is over a long distance, the transmission output and the antenna gain are likely to be low when a terminal such as a normal smartphone is used, which may make communication with a satellite at a high satellite altitude or a low elevation angle difficult. For this reason, repetition transmission has been studied as one of the coverage enhancements in NTN.

Here, in NR Release 16 (referred to as NR Rel. 16), the repetition transmission is supported and is configured for each terminal. For example, the repetition transmission is configured by a terminal-individual (terminal-specific or UE specific) higher layer configuration (for example, RRC configuration). For this reason, NR Rel. 16 does not support repetition transmission for signals before the UE-specific higher layer configuration (for example, signal used for initial access).

Further, in NR Release 17 (referred to as NR Rel. 17), the repetition transmission of Msg.3 PUSCH is supported. For example, the terminal measures the received quality of the terminal (for example, Reference Signal Received Power (RSRP), path loss, and the like), and selects a specific sequence of PRACH based on the measurement result, thereby requesting the base station to perform the repetition transmission of Msg.3 PUSCH.

In NR Release 18 (referred to as NR Rel. 18), for example, in addition to the repetition transmission of Msg.3 PUSCH, the necessity of repetition transmission of PRACH (Msg.1) and repetition transmission of an uplink control channel (for example, PUCCH: Physical Uplink Control Channel) for a response (for example, HARQ-ACK) to Msg.4 (Msg.4 PDSCH) has been discussed.

In NR Rel. 18, a control method for the repetition transmission, such as a determination method (or configuration method) of the number of times of the repetition transmission for initial access in NTN and an indication method of information on the repetition transmission to a terminal, has not been sufficiently discussed. Further, for example, as in NR Rel. 17, when the method in which the terminal measures the received quality (RSRP, path loss, or the like) of the terminal and selects a specific sequence of PRACH based on the measurement result is applied as a control method for the repetition transmission, the received quality (for example, received signal to Noise Ratio (SNR)) is likely to be lower in NTN than in the terrestrial network, and thus, the measurement accuracy of the quality such as RSRP is reduced, which may prevent an appropriate control or configuration of the repetition transmission.

In one non-limiting and exemplary embodiment of the present disclosure, a control method for repetition transmission for initial access will be described, for example. For example, a terminal may select (or determine, configure) a resource for an uplink channel at the time of initial access based on information on a location of the terminal, and may transmit a specific channel or signal using the selected resource.

[Overview of Communication System]

A communication system according to an embodiment of the present disclosure includes base station 100 and terminal 200.

FIG. 2 is a block diagram illustrating an exemplary configuration of a part of base station 100. In base station 100 illustrated in FIG. 2, a controller (corresponding to, for example, control circuitry) determines, based on a first resource (for example, resource for PRACH) for an uplink channel determined based on information on a location of terminal 200, a second resource (for example, resource for Msg.3 PDSCH or resource for PUCCH for HARQ-ACK transmission for Msg.4) for the uplink channel. A receiver (corresponding to, for example, reception circuitry) receives a signal for the uplink channel using the resource for the uplink channel.

FIG. 3 is a block diagram illustrating an exemplary configuration of a part of terminal 200. In terminal 200 illustrated in FIG. 3, a controller (corresponding to, for example, control circuitry) determines a resource for an uplink channel (for example, channel used for random access procedure) based on information on a location of terminal 200. A transmitter (corresponding to, for example, transmission circuitry) transmits a signal for the uplink channel using the resource.

(Embodiment 1)

In the present embodiment, terminal 200 determines (or selects) a PRACH sequence based on location information on terminal 200, and transmits a signal for PRACH (Msg.1) to base station 100 using the selected PRACH sequence. For example, the PRACH sequence may be a root sequence or a CS sequence. Further, the PRACH sequence may be replaced with a RACH resource called a RACH Occasion (RO). Further, terminal 200 may transmit Msg.3 PUSCH with a repetition corresponding to the selected PRACH sequence. Further, terminal 200 may transmit PUCCH for HARQ-ACK transmission for Msg.4 with a repetition corresponding to the selected PRACH sequence.

[Configuration of Base Station]

FIG. 4 is a block diagram illustrating an exemplary configuration of base station 100 according to the present embodiment. Base station 100 includes, for example, antenna 101, radio receiver 102, PUSCH reception processor 103, PUCCH reception processor 104, PRACH reception processor 105, data generator 106, controller 107, data transmission processor 108, and radio transmitter 109.

At least one of PUSCH reception processor 103, PUCCH reception processor 104, PRACH reception processor 105, data generator 106, controller 107, and data transmission processor 108 illustrated in FIG. 4 may be included in, for example, the controller illustrated in FIG. 2. Meanwhile, at least one of antenna 101 and radio receiver 102 illustrated in FIG. 4 may be included in the receiver illustrated in FIG. 2, for example.

Radio receiver 102 performs reception processing such as down-conversion and/or A/D conversion on a signal (for example, including PUSCH (data signal), PUCCH (control signal), or PRACH (random access signal)) received from terminal 200 via antenna 101, for example, and then outputs the signal after the reception processing to PUSCH reception processor 103, PUCCH reception processor 104, and PRACH reception processor 105.

PUSCH reception processor 103, for example, performs channel estimation, demodulation processing, and decoding processing on a signal in time- and frequency-resources allocated to PUSCH among the received signals input from radio receiver 102, and thereby obtains a data sequence. PUSCH reception processor 103 outputs the decoded signal (data sequence).

PUCCH reception processor 104, for example, performs channel estimation, demodulation processing, and decoding processing on a signal in the time- and frequency-resources allocated to PUCCH among the received signals input from radio receiver 102, and thereby obtains uplink control information (UCI). The UCI may include, for example, at least one of channel quality information (CQI) and a response signal (for example, HARQ-ACK). PUCCH reception processor 104 outputs the decoded signal (UCI) to controller 107.

PRACH reception processor 105, for example, detects PRACH (determines the presence or absence of PRACH) transmitted from terminal 200 and identifies a PRACH sequence (for example, PRACH sequence number) or an RO (for example, RO number) to be used for the detected PRACH, for a signal in the time- and frequency-resources allocated to PRACH among the received signals input from radio receiver 102. PRACH reception processor 105 outputs information on the detected PRACH to controller 107.

Data generator 106 generates, for example, a downlink signal for each terminal 200 and outputs the generated downlink signal to data transmission processor 108. The downlink signal generated by data generator 106 may include at least any of signals such as user data (for example, PDSCH), a control signal (for example, PDCCH), a synchronization signal block (for example, SSB: Synchronization Signal (SS)/Physical Broadcast Channel (PBCH) Block), a reference signal (RS), and Medium Access Control (MAC) control information.

Controller 107 may generate, for example, system information (for example, broadcast information) such as a Master Information Block (MIB) or a System Information Block (SIB), and individual control information (for example, RRC control information). Controller 107 outputs the generated information to data transmission processor 108.

The system information may include control information for NTN, which includes at least one parameter such as the satellite ephemeris, common TA parameter, or Epoch time, for example. Further, the system information may include information on configuration of a PRACH resource. Further, the system information may include, for example, information on mapping (association) between a distance between the satellite and terminal 200 and a PRACH sequence (hereinafter, also referred to as "information on mapping between distance and PRACH sequence").

Further, controller 107 generates downlink control information (DCI) associated with PDSCH transmission, or PDCCH. The DCI may include information on PDSCH retransmission control such as a New Data Indicator (NDI) or a Redundancy Version (RV), information on a modulation and coding scheme (MCS) for PDSCH or PUSCH, resource allocation information for PDSCH or PUSCH, resource allocation information for PUCCH used for HARQ-ACK transmission for PDSCH, and the like. Further, for example, the resource allocation information may include information on the number of times of repetition transmissions (number of Repetitions, repetition count).

Controller 107 may perform, for example, retransmission control for PDSCH and MCS configuration using the UCI input from PUCCH reception processor 104. Further, controller 107 determines (or configures), for example, at least one of the number of Repetitions of Msg.3 PUSCH and the number of Repetitions of PUCCH used for the HARQ-ACK transmission for Msg.4 PDSCH, based on the information on the detected PRACH (for example, PRACH sequence number or RO number) input from PRACH reception processor 105. Controller 107 then generates at least one of resource allocation information for Msg.3 PUSCH reflecting the determined number of repetitions and resource allocation information for PUCCH used for the HARQ-ACK transmission for Msg.4 PDSCH reflecting the determined number of repetitions, and outputs the generated information to data transmission processor 108.

Data transmission processor 108 encodes and modulates, for example, the signal input from data generator 106 and the signal input from controller 107, and then outputs the modulated signal to radio transmitter 109.

Radio transmitter 109, for example, performs transmission processing such as D/A conversion, up-conversion, and/or amplification on the signal input from data transmission processor 108, and then transmits the radio signal after the transmission processing from antenna 101.

[Configuration of Terminal]

Next, a configuration example of terminal 200 will be described.

FIG. 5 is a block diagram illustrating an exemplary configuration of terminal 200 according to the present embodiment. Terminal 200 includes, for example, antenna 201, radio receiver 202, data reception processor 203, controller 204, timing adjuster 205, PUSCH transmission processor 206, PUCCH transmission processor 207, PRACH transmission processor 208, and radio transmitter 209.

At least one of data reception processor 203, controller 204, timing adjuster 205, PUSCH transmission processor 206, PUCCH transmission processor 207, and PRACH transmission processor 208 illustrated in FIG. 5 may be included in, for example, the controller illustrated in FIG. 3. Meanwhile, at least one of antenna 201 and radio transmitter 209 illustrated in FIG. 5 may be included in the transmitter illustrated in FIG. 3, for example.

Radio receiver 202 performs reception processing such as down-conversion and/or A/D conversion on a downlink signal, such as a data signal (for example, PDSCH) or a control signal (for example, PDCCH), received from base station 100 via antenna 201, outputs the signal after the reception processing to data reception processor 203, and outputs information on a reception timing of the signal to timing adjuster 205.

Data-reception processor 203, for example, performs demodulation processing and decoding processing on the received signal input from radio receiver 202 (e.g., PDCCH or PDSCH). The control signal (for example, PDCCH) may include, for example, resource allocation information for a downlink data signal (for example, PDSCH), resource allocation information for an uplink data signal (for example, PUSCH), or PUCCH resource allocation information used for the HARQ-ACK transmission for PDSCH. Additionally, the downlink data signal (e.g., PDSCH) may include user data, for example. The downlink data signal (for example, PDSCH) may further include broadcast information such as system information, RRC control information, MAC Control Element (MAC CE) control information, a RACH response (for example, Msg.2), or information on a TA command.

Further, data reception processor 203, for example, performs reception processing of information for NTN (for example, including at least one of satellite ephemeris, common TA parameter, and Epoch time) included in the broadcast information or the RRC control information (for example, RRC Reconfiguration message), the information on a PRACH resource, and the information on mapping between a distance between the satellite and terminal 200 and a PRACH sequence, and then outputs the signal after the reception processing to controller 204. Further, data reception processor 203, for example, outputs the control information included in PDCCH and Msg.2 to controller 204.

Controller 204 calculates a distance between terminal 200 and the satellite using the location information on terminal 200 (for example, information such as latitude, longitude, altitude, and the like) acquired by GNSS or the like and the location information on the satellite calculated from the information for NTN (for example, information on satellite ephemeris and epoch time) input from data reception processor 203. Further, controller 204 selects a PRACH sequence (or RO) in accordance with the calculated distance between terminal 200 and the satellite, based on the information on a PRACH resource and the information on mapping between a distance and a PRACH sequence (or RO) input from data reception processor 203.

Further, controller 204 configures a resource of PUSCH or PUCCH based on the control information that is included in the received PDCCH or Msg.2 and is input from data reception processor 203. Here, with respect to at least one resource for Msg.3 PUSCH and PUCCH used for the HARQ-ACK transmission for Msg.4 PDSCH, controller 204 may determine the number of repetitions based on the PRACH sequence selected for the transmission of Msg.1 (for example, resource based on distance between terminal 200 and satellite), and may configure a resource corresponding to the number of repetitions that has been determined.

Further, controller 204 calculates the propagation delay amount of each of a service link and a feeder link based on the location information on terminal 200, the location information on the satellite, and the information on the common TA parameter, and then outputs the information on the calculated propagation delay amount to timing adjuster 205. For example, controller 204 may calculate the propagation delay time of the service link based on the distance between terminal 200 and the satellite, and the radio wave propagation velocity (approximately $3 \times 10^8$ m/s), and may calculate the propagation delay time of the feeder link based on the common TA parameter. For example, controller 204 may calculate $N_{TA,adj}^{UE}$ and $N_{TA,adj}^{common}$ in Equation 1 and output the calculated values to timing adjuster 205.

Timing adjuster 205 controls (for example, adjusts) a transmission timing of a transmission signal (uplink signal), for example. Timing adjuster 205 outputs information on the timing adjustment to radio transmitter 209. For example, timing adjuster 205 may adjust the transmission timing of the uplink signal (for example, PUSCH, PUCCH, or PRACH) such that the signal is received at a defined timing in base station 100, by compensating for the propagation delay time of the service link and the feeder link based on information on the propagation delay amount of each of the service link and the feeder link input from controller 204. Timing adjuster 205 may perform the timing adjustment in accordance with Equation 1, for example.

PUSCH transmission processor 206, for example, performs encoding and modulation processing on the input transmission data (for example, PUSCH) and outputs a signal mapped to the time- and frequency-resources configured in controller 204 to radio transmitter 209.

PUCCH transmission processor 207, for example, performs encoding and modulation processing on the control information (UCI) such as HARQ-ACK or CQI and outputs a signal mapped to the time- and frequency-resources configured in controller 204 to radio transmitter 209.

PRACH transmission processor 208, for example, generates the PRACH sequence selected in controller 204 and outputs a signal mapped to time- and frequency-resources configured in controller 204 to radio transmitter 209.

Radio transmitter 209, for example, performs transmission processing such as D/A conversion, up-conversion, and/or amplification on the signal input from PUSCH transmission processor 206, PUCCH transmission processor 207, or PRACH transmission processor 208, and then transmits the radio signal after the transmission processing from antenna 201. Radio transmitter 209 may transmit a signal at a timing specified in the information input from, for example, timing adjuster 205.

[Exemplary Operations of Base Station and Terminal]

In the following, exemplary operations of base station 100 and terminal 200 will be described.
FIG. 6 illustrates in (a) a flowchart describing an exemplary operation of base station 100, and FIG. 6 illustrates in (b) a flowchart describing an exemplary operation of terminal 200.
Base station 100 transmits, for example, broadcast information (for example, SIB) periodically (BS-ST1). The SIB may include, for example, satellite ephemeris (for example, location information of satellite), a common TA parameter, PRACH resource information, and information on a relationship (mapping) between a PRACH sequence or an RO and a distance.
After transmitting the broadcast information, base station 100 waits for PRACH for the configured PRACH resource (for example, time resource, frequency resource, or sequence) (BS-ST2).
Terminal 200 receives the SIB transmitted from base station 100 (UE-ST1) and calculates a distance between terminal 200 and a satellite using location information on the satellite (for example, satellite ephemeris) included in the SIB (UE-ST2). Then, terminal 200 selects a PRACH sequence or an RO depending on the calculated distance based on the information on the relationship between the PRACH sequence or RO and the distance, and transmits PRACH for initial access using the selected PRACH sequence or RO (UE-ST3).
After transmitting PRACH, terminal 200 waits for a RACH response (for example, RAR or Msg.2) (UE-ST4).
FIG. 7 illustrates an example of the information on the relationship between a PRACH sequence (or RO) and a distance (distance between terminal 200 and satellite). In the example of FIG. 7, when the distance between terminal 200 and the satellite is 600 to 749 km, terminal 200 selects a PRACH sequence or RO from PRACH sequence numbers or RO numbers 0 to 15. Similarly, in the example of FIG. 7, when the distance between terminal 200 and the satellite is 750 to 899 km, terminal 200 selects a PRACH sequence or RO from PRACH sequence numbers or RO numbers 16 to 31. The same applies to other distances.
In FIG. 6, when PRACH is detected (or received), base station 100 determines (or configures) at least one of the number of repetitions of Msg.3 PUSCH and the number of repetitions of PUCCH for HARQ-ACK transmission for Msg.4, based on the PRACH sequence or RO used for the detected PRACH (BS-ST3).
For example, the PRACH sequence or RO may be mapped with the number of repetitions for each channel in advance. For example, in the mapping between the PRACH sequence or RO and the number of repetitions for each channel, a PRACH sequence or RO with a longer distance between corresponding terminal 200 and the satellite may be mapped with a larger number of repetitions, among a plurality of PRACH sequences or ROs. For example, in the PRACH sequences (or ROs) illustrated in FIG. 7, a larger number of repetitions may be mapped with a group of PRACH sequence numbers (or RO numbers) with a longer distance between terminal 200 and the satellite (not illustrated).
Base station 100 transmits a RACH response (RAR or Msg.2) including information on the determined number of repetitions of Msg.3 PUSCH to terminal 200 (BS-ST4).
After transmitting the RACH response, base station 100 waits for Msg.3 PUSCH in the resource to which Msg.3 PUSCH is assigned (BS-ST5).
When receiving a RACH response, terminal 200 transmits Msg.3 PUSCH using the resource specified (or indicated) by the received RACH response (UE-ST5). For example, when the number of repetitions is specified by the RACH response, terminal 200 may transmit Msg.3 PUSCH with the specified number of repetitions. Further, for example, terminal 200 may transmit Msg.3 PUSCH without repetition in a case where the number of repetitions is not specified by the RACH response.
Further, whether the number of repetitions is specified may be determined, for example, depending on whether terminal 200 has selected, in the Msg.1 transmission, a specific PRACH sequence indicated via SIB. For example, terminal 200 may determine that the number of repetitions is specified when a specific PRACH sequence is selected in the Msg.1 transmission, and may determine that the number of repetitions is not specified when another PRACH sequence is selected. Further, for example, the number of repetitions may be individually configured for each specific PRACH sequence.
After transmitting Msg.3 PUSCH, terminal 200 waits for DCI for allocation of Msg.4 PDSCH (UE-ST6). For example, terminal 200 may wait for DCI using a defined Radio Network Temporary Identifier (RNTI). The defined RNTI may be, for example, a Temporary Cell (TC)-RNTI. Note that the defined RNTI is not limited to TC-RNTI and may be other RNTIs.
When receiving Msg.3 PUSCH, base station 100 generates DCI for allocation of Msg.4 PDSCH and transmits DCI through PDCCH (BS-ST6). The DCI may include, for example, information on the number of repetitions of PUCCH for the HARQ-ACK transmission for Msg.4 that has been determined in BS-ST3. Further, base station 100 transmits Msg.4 PDSCH using the resource allocated by DCI (BS-ST6).

In a case where terminal 200 receives DCI for allocation of Msg.4 PDSCH, terminal 200 receives Msg.4 PDSCH using the resource allocated by DCI (UE-ST7). Further, when terminal 200 is successful in correct decoding of Msg.4 PDSCH, terminal 200 transmits ACK, and when terminal 200 is not successful in the correct decoding of Msg.4 PDSCH, terminal 200 transmits PUCCH including HARQ-ACK indicating NACK (for example, also referred to as Msg.4 HARQ-ACK), using a resource specified by DCI (UE-ST7). Here, when the number of repetitions is specified by DCI, terminal 200 may transmit PUCCH with the specified number of repetitions. Further, for example, terminal 200 may transmit PUCCH without repetition in a case where the number of repetitions is not specified by DCI.

Further, whether the number of repetitions is specified may be determined, for example, depending on whether terminal 200 has selected, in the Msg.1 transmission, a specific PRACH sequence indicated via SIB. For example, terminal 200 may determine that the number of repetitions is specified when a specific PRACH sequence is selected in the Msg.1 transmission, and may determine that the number of repetitions is not specified when another PRACH sequence is selected. Further, for example, the number of repetitions may be individually configured for each specific PRACH sequence.

Base station 100 waits for HARQ-ACK for Msg.4 PDSCH (BS-ST7). When receiving ACK, base station 100 completes an initial access procedure, and when not receiving ACK, base station 100 retransmits DCI for allocation of Msg.4 PDSCH and Msg.4 PDSCH (BS-ST6), and performs retransmission processing up to the defined number of times.

Exemplary operations of base station 100 and terminal 200 have been each described, thus far.

As described above, terminal 200 may determine a sequence or an RO (example of resource for uplink channel) to be used for PRACH, based on information on a distance between terminal 200 and a satellite (example of information on location of terminal), and may transmit PRACH (for example, Msg.1) using the determined sequence or RO.

Meanwhile, base station 100 determines the number of repetitions of PUCCH (example of second resource for uplink channel) to be used for Msg.3 PDSCH or for HARQ-ACK transmission for Msg.4 PDSCH, based on a sequence or RO (example of first resource for uplink channel) to be used for PRACH, which is determined based on information on the distance between terminal 200 and a satellite (example of information on location of terminal), and receives PUCCH to be used for Msg.3 PDSCH or for the HARQ-ACK transmission for Msg.4 PDSCH, using the determined number of repetitions.

In satellite communication, the propagation is almost free space (for example, Line-of-Sight (LOS) environment), and thus, the propagation attenuation can be estimated in accordance with the distance. Further, the desired number of repetitions in the satellite communication (for example, the number of repetitions required to satisfy desired received quality) depends on a propagation attenuation amount. Thus, the desired number of repetitions (for example, the number of repetitions required to satisfy desired received quality) can be estimated based on the distance between terminal 200 and the satellite (or locations of terminal and satellite).

In the present embodiment, terminal 200 selects a PRACH sequence (or RO) based on the distance between the satellite and terminal 200, and base station 100 determines the number of repetitions of an uplink channel (for example, PUSCH or PUCCH) based on the detected PRACH sequence (or RO). That is, the number of repetitions of the uplink channel is determined depending on the distance between the satellite and terminal 200. Here, the distance between the satellite and terminal 200 is calculated using the location information acquired in terminal 200 for timing adjustment or frequency adjustment. Thus, in the present embodiment, communication using an appropriate number of repetitions is possible through a simple processing using the location information acquired for the timing adjustment or frequency adjustment.

Further, in satellite communication, since the transmission is over a long distance, the communication is likely to be performed at a low SNR, and the measurement accuracy of the received quality (for example, RSRP) is thus likely to degrade. In the present embodiment, the number of repetitions is determined using the distance between the satellite and terminal 200, without using the received quality. Thus, according to the present embodiment, it is possible to accurately estimate the desired number of repetitions without depending on the received quality (for example, SNR). Further, in the present embodiment, terminal 200 need not perform received quality measurement before the PRACH transmission, thereby enabling a simple and fast processing.

Further, base station 100 can estimate the necessity of the repetition for an uplink channel (for example, PUSCH or PUCCH) or the desired number of repetitions, in response to the selection of a PRACH sequence (or RO) by terminal 200 in accordance with the distance between the satellite and terminal 200. For this reason, base station 100 can configure an appropriate number of repetitions of Msg.3 PUSCH and PUCCH used for Msg.4 HARQ-ACK, which are processed before the UE-specific RRC configuration (for example, RRC reconfiguration), thereby improving the received quality of Msg.3 PUSCH and PUCCH used for Msg.4 HARQ-ACK in base station 100.

Thus, according to the present embodiment, it is possible to appropriately control the repetition transmission for initial access in NTN, thereby improving the received quality of an uplink signal.

Note that, in Embodiment 1, a case has been described where base station 100 transmits the RACH response (RAR or Msg.2) including the information on the determined number of repetitions of Msg.3 PUSCH, but the present disclosure is not limited to this case. For example, base station 100 may transmit a RACH response that does not include the information on the number of repetitions of Msg.3 PUSCH. In this case, terminal 200 may determine the number of repetitions in accordance with the PRACH sequence (or RO) used in the Msg.1 transmission, and may transmit Msg.3 PUSCH with the determined number of repetitions. For example, information on mapping (mapping relationship) between the PRACH sequence (or RO) and the number of repetitions of Msg.3 PUSCH may be indicated to terminal 200 via SIB. Thus, it is possible to reduce the amount of information for indicating the RACH response and to use the same RACH response as in Rel. 15/16.

Similarly, in Embodiment 1, a case has been described where base station 100 transmits DCI including the information on the determined number of repetitions of PUCCH for the HARQ-ACK transmission for Msg.4, but the present disclosure is not limited to this case. For example, base station 100 may transmit DCI that does not include the above information on the number of repetitions of PUCCH. In this case, terminal 200 may determine the number of repetitions in accordance with the PRACH sequence (or RO) used in the Msg.1 transmission, and may transmit PUCCH with the determined number of repetitions. For example, information on mapping (mapping relationship) between the PRACH sequence (or RO) and the number of repetitions of PUCCH for the HARQ-ACK transmission for Msg.4 may be indicated to terminal 200 via SIB. Thus, it is possible to reduce the amount of information for indicating DCI and to use the same DCI as in Rel. 15/16.

Further, in Embodiment 1, a case where the number of repetitions is configured for each of Msg.3 PUSCH and PUCCH for the Msg.4 HARQ-ACK transmission has been described, but the present disclosure is not limited to this case, and the configuration on the number of repetitions may be applied to either one. Further, for example, the number of repetitions configured for each of Msg.3 PUSCH and PUCCH for the Msg.4 HARQ-ACK transmission may be the same (common) or may be different (individually configured).

Further, the PRACH resource determined based on the distance between terminal 200 and the satellite may be either a PRACH sequence or an RO, or both. The same applies to each embodiment described later.

(Embodiment 2)

Configurations of base station 100 and terminal 200 according to the present embodiment may be the same as in Embodiment 1, for example.

In the present embodiment, terminal 200 determines (or selects) the number of repetitions of PRACH (Msg.1), based on location information on terminal 200, and transmits PRACH with the selected number of repetitions.

Further, in the present embodiment, terminal 200 transmits Msg.3 PUSCH with a repetition corresponding to the selected number of repetitions of PRACH, for example. Further, terminal 200 transmits PUCCH for HARQ-ACK transmission for Msg.4, with a repetition corresponding to the selected number of repetitions of PRACH, for example.

Base station 100 and terminal 200 according to the present embodiment will be described with respect to operations different from those in Embodiment 1.

Base station 100 (for example, controller 107) configures, as information on a PRACH resource, configuration information on PRACH and information on mapping between the number of repetitions of PRACH and a distance (for example, distance between satellite and terminal 200). The configured information may be included in SIB and transmitted to terminal 200, for example. For example, the configuration information on PRACH may include information on PRACH resources with different numbers of repetitions.

Further, base station 100 (for example, controller 107) determines (or configures) at least one of the number of Repetitions of Msg.3 PUSCH and the number of repetitions of PUCCH used for HARQ-ACK transmission for Msg.4 PDSCH in accordance with the number of repetitions of the detected PRACH input from PRACH reception processor 105 based on the configured information. Further, base station 100 may receive Msg.3 PUSCH and PUCCH used for the HARQ-ACK transmission for Msg.4 PDSCH, based on the determined number of repetitions.

Terminal 200 (for example, controller 204) calculates a distance between terminal 200 and the satellite using, for example, the location information on terminal 200 acquired by GNSS or the like and the location information on the satellite calculated from the information for NTN (for example, satellite ephemeris and epoch time) input from data reception processor 203. Then, terminal 200 selects the number of repetitions of PRACH in accordance with the calculated distance based on the information on the PRACH resource and the information on the mapping between the number of repetitions of PRACH and the distance (for example, distance between satellite and terminal 200).

FIG. 8 illustrates configuration examples of a PRACH resource.

As illustrated in (a) of FIG. 8, the number of repetitions of PRACH may be the number of times the PRACH sequence is repeated in one RO (PRACH resource configuration example 1). In the example in (a) of FIG. 8, a case where six PRACH sequences are repeatedly configured in one RO (number of repetitions = 6) and a case is indicated where two PRACH sequences are repeatedly configured (number of repetitions = 2).

Note that, in PRACH resource configuration example 1, the number of repetitions may be uniquely configured for each PRACH sequence. For example, in sequence 1 to 10, the number of repetitions may be configured to 1, and in sequence 11 to 20, the number of repetitions may be configured to 4. Alternatively, in PRACH resource configuration example 1, the number of repetitions may be configured independently of the PRACH sequence. For example, a plurality of candidates for the number of repetitions may be configured for all sequences available for the PRACH transmission.

Further, as illustrated in (b) of FIG. 8, the number of repetitions of PRACH may be the number of ROs used for a single PRACH transmission (PRACH resource configuration example 2). In (b) of FIG. 8, terminal 200 transmits PRACH in one or a plurality of ROs with different timings in accordance with the number of repetitions. In the plurality of ROs, the same PRACH sequence may be configured, or different PRACH sequences may be configured.

In Embodiment 2, other processing and operations may be the same as those in Embodiment 1.

As described above, in the present embodiment, terminal 200 determines the number of repetitions of PRACH based on the information on the location of terminal 200. According to the present embodiment, in addition to the same effects as those in Embodiment 1, the number of repetitions of PRACH can be appropriately configured.

Incidentally, base station 100 may indicate information on the number of Repetitions of Msg.3 PUSCH to terminal 200 in the same manner as in Embodiment 1. Similarly, base station 100 may indicate information on the number of repetitions of PUCCH used for HARQ-ACK transmission for Msg.4 PDSCH to terminal 200 in the same manner as in Embodiment 1. The information on the number of repetitions may be, for example, indicated by a RACH response (or RAR, Msg.2) with respect to Msg.3 PDSCH, and may be indicated by DCI including the allocation of Msg.4 PDSCH with respect to PUCCH used for the HARQ-ACK transmission for Msg.4 PDSCH.

Alternatively, terminal 200 may determine (or select, configure) at least one of the number of Repetitions of Msg.3 PUSCH and the number of repetitions of PUCCH used for the HARQ-ACK transmission for Msg.4 PDSCH in accordance with the determined number of repetitions of PRACH, for example. In this case, the information on the number of repetitions need not be indicated from base station 100 to terminal 200. Note that the number of repetitions of at least one of Msg.3 PUSCH and PUCCH for the HARQ-ACK transmission for Msg.4 is not limited to being determined based on the number of repetitions of PRACH and may be determined based on the location information on terminal 200 (for example, the distance between terminal 200 and the satellite).

Further, terminal 200 may determine the sequence (PRACH sequence) or RO to be used for PRACH (Msg.1), based on the location information on terminal 200 in the same manner as in Embodiment 1.

(Embodiment 3)

Configurations of base station 100 and terminal 200 according to the present embodiment may be the same as in Embodiment 1, for example.

In the present embodiment, terminal 200 determines (or selects) a PRACH sequence based on a TA value calculated from the location information on terminal 200, and transmits PRACH using the selected PRACH sequence.

Further, terminal 200 transmits Msg.3 PUSCH with a repetition corresponding to the selected PRACH sequence, for example. Further, terminal 200 transmits PUCCH for HARQ-ACK transmission for Msg.4 with a repetition corresponding to the selected PRACH sequence, for example.

Base station 100 and terminal 200 according to the present embodiment will be described with respect to operations different from those in Embodiment 1.

Base station 100 (for example, controller 107) configures information on mapping between the TA value calculated in terminal 200 and the PRACH sequence. The configured information may be included in SIB and transmitted to terminal 200, for example.

Further, base station 100 (for example, controller 107) determines (or configures) at least one of the number of Repetitions of Msg.3 PUSCH and the number of repetitions of PUCCH used for HARQ-ACK transmission for Msg.4 PDSCH, in accordance with the detected PRACH sequence input from PRACH reception processor 105 based on the configured information. Further, base station 100 may receive Msg.3 PUSCH and PUCCH used for the HARQ-ACK transmission for Msg.4 PDSCH, based on the determined number of repetitions.

For example, the mapping between the PRACH sequence and the number of repetitions for each channel may be configured in advance. For example, in the mapping between the PRACH sequence and the number of repetitions for each channel, the PRACH sequence with a larger corresponding TA value may be mapped with a larger number of repetitions among a plurality of PRACH sequences.

Terminal 200 (for example, controller 204) estimates the propagation delay of each of a service link and a feeder link using, for example, the location information on terminal 200 acquired by GNSS or the like and the location information of the satellite calculated from the information for NTN (for example, satellite ephemeris and epoch time) input by data reception processor 203, and thereby calculates $N_{TA,adj}^{UE}$ and $N_{TA,adj}^{common}$ in Equation 1.

Then, terminal 200 selects a PRACH sequence in accordance with the value (for example, value of $N_{TA,adj}^{UE}$) calculated based on the propagation delay of the service link (for example, propagation delay between satellite and terminal 200), based on the mapping between the TA value and the PRACH sequence indicated via SIB.

In Embodiment 3, other processing and operations may be the same as those in Embodiment 1.

As described above, in the present embodiment, terminal 200 determines the PRACH resource (for example, PRACH sequence) based on the TA value calculated based on the location of terminal 200 and the location of the satellite.

In satellite communication, a propagation attenuation amount depends on the propagation delay amount (for example, time required for propagation). Further, the TA value is calculated in terminal 200 based on an estimated value of the round-trip propagation delay amount between the satellite and terminal 200. Accordingly, the propagation attenuation amount can be estimated based on the TA value calculated in terminal 200. Further, as described in Embodiment 1, the desired number of repetitions in the satellite communication (for example, the number of repetitions required to satisfy desired received quality) depends on the propagation attenuation amount. Thus, the desired number of repetitions can be estimated in accordance with the TA value calculated in terminal 200. Thus, in the present embodiment, communication with an appropriate number of repetitions is possible through a simple processing using the TA value acquired for timing adjustment in terminal 200.

Further, in the present embodiment, the selection of the PRACH sequence made by terminal 200 based on the TA value allows base station 100 to estimate the necessity of the repetition for an uplink channel (for example, PUSCH or PUCCH) or the desired number of repetitions, in accordance with the detected PRACH sequence. For this reason, base station 100 can configure an appropriate number of repetitions for Msg.3 PUSCH and PUCCH used for Msg.4 HARQ-ACK, which are processed before the UE-specific RRC configuration (for example, RRC reconfiguration).

Note that, in the present embodiment, a case where the PRACH sequence is determined based on the TA value has been described, but the present disclosure is not limited to this case. For example, in the same manner as in Embodiment 1 or 2, at least one of the PRACH sequence, the RO, and the number of repetitions of PRACH may be determined based on the TA value.

Further, in the present embodiment, a case where the value of $N_{TA,adj}{}^{UE}$ is used as the TA value has been described, but the present embodiment is not limited to this case, and other values related to the timing control may be used.

Further, base station 100 may indicate information on the number of Repetitions of Msg.3 PUSCH to terminal 200 in the same manner as in Embodiment 1. Similarly, base station 100 may indicate information on the number of repetitions of PUCCH used for the HARQ-ACK transmission for Msg.4 PDSCH to terminal 200 in the same manner as in Embodiment 1. The information on the number of repetitions may be, for example, indicated by a RACH response (or RAR, Msg.2) with respect to Msg.3 PDSCH, and may be indicated by DCI including the allocation of Msg.4 PDSCH with respect to PUCCH used for the HARQ-ACK transmission for Msg.4 PDSCH.

Alternatively, terminal 200 may determine (or select, configure) at least one of the number of Repetitions of Msg.3 PUSCH and the number of Repetitions of PUCCH used for the HARQ-ACK transmission for Msg.4 PDSCH in accordance with the determined PRACH resource (for example, PRACH sequence, RO, number of repetitions of PRACH). In this case, the information on the number of repetitions need not be indicated from base station 100 to terminal 200. Note that the number of repetitions of at least one of Msg.3 PUSCH and PUCCH for the HARQ-ACK transmission for Msg.4 is not limited to being determined based on the PRACH resource and may be determined based on the TA value calculated in terminal 200.

(Embodiment 4)

Configurations of base station 100 and terminal 200 according to the present embodiment may be the same as in Embodiment 1, for example.

In the present embodiment, terminal 200 determines (or selects) the number of repetitions of PRACH based on the detected SSB, and transmits PRACH with the selected number of repetitions. Here, since a cover area on the ground surface is formed by a beam (for example, SSB beam) corresponding to each SSB, the SSB detected in terminal 200 depends on the location of terminal 200. That is, information on the SSB beam (for example, SSB number) corresponding to SSB that terminal 200 receives is included in the information on the location of terminal 200.

Further, in the present embodiment, terminal 200 transmits Msg.3 PUSCH with a repetition corresponding to the selected number of repetitions of PRACH, for example. Further, terminal 200 transmits PUCCH for HARQ-ACK transmission for Msg.4 with a repetition corresponding to the selected number of repetitions of PRACH, for example.

Base station 100 and terminal 200 according to the present embodiment will be described with respect to operations different from those in Embodiment 1.

Base station 100 (for example, controller 107) configures, as information on a PRACH resource, configuration information on PRACH and information on mapping between an SSB number and the number of repetitions of PRACH. The configured information may be included in SIB and transmitted to terminal 200, for example. For example, the configuration information on PRACH may include information on PRACH resources with different numbers of repetitions.

Further, base station 100 (for example, controller 107) determines (or configures) at least one of the number of Repetitions of Msg.3 PUSCH and the number of repetitions of PUCCH used for the HARQ-ACK transmission for Msg.4 PDSCH, in accordance with the number of repetitions of the detected PRACH input from PRACH reception processor 105 based on the configured information. Further, base station 100 may receive PUCCH used for Msg.3 PUSCH and HARQ-ACK transmission for Msg.4 PDSCH, based on the determined number of repetitions.

Terminal 200 detects SSB through cell search and receives MIB and SIB after detecting SSB. Terminal 200 selects the number of repetitions of PRACH corresponding to the detected SSB (SSB number) based on, for example, the information on the PRACH resource and the information on mapping between the SSB number and the number of repetitions of PRACH included in SIB.

FIG. 9 illustrates a configuration example of a PRACH resource (for example, PRACH sequence or RO). FIG. 9 illustrates in (a) an exemplary locational relationship between the satellite and SSB beams (for example, SSB beam 1, SSB beam 2, and SSB beam 3) emitted from the satellite, and FIG. 9 illustrates in (b) examples of mapping between SSB beams (or SSB numbers) and the number of repetitions of PRACH.

As illustrated in (b) of FIG. 9, base station 100 associates and configures SSB beam 1 (SSB number 1) and a PRACH resource with the repetition count of four, SSB beam 2 (SSB number 2) and a PRACH resource with the repetition count of two, and SSB beam 3 (SSB number 3) and a PRACH resource with the repetition count of one (for example, without repetition), respectively. Base station 100 indicates the information on mapping between the SSB beam and the number of repetitions to terminal 200 in the cell via SIB.

As illustrated in (a) of FIG. 9, the distance between the terminal 200 and the satellite is longer for a beam that irradiates the ground surface far from the satellite (for example, beam with low elevation angle from ground surface; SSB beam 1 in (a) of FIG. 9). Whereas the distance between the terminal 200 and the satellite is shorter for a beam that irradiates the ground surface close to the satellite (for example, beam with high elevation angle from ground surface; SSB beam 3 in (a) of FIG. 9).

Accordingly, for example, base station 100 may configure a larger number of repetitions for the beam that irradiates the ground surface far from the satellite, as indicated in (b) of FIG. 9, and may configure a smaller number of Repetitions for the beam that irradiates the ground surface close to the satellite.

For example, in (a) and (b) of FIG. 9, when detecting SSB beam 1 (SSB number 1) (that is, when terminal is located in cover area of SSB beam 1), terminal 200 selects a PRACH sequence (or RO) with the repetition count of four. Similarly, in (a) and (b) of FIG. 9 when detecting SSB beam 2 (SSB number 2) (that is, when terminal is located in cover area of SSB beam 2), terminal 200 selects a PRACH sequence (or RO) with the repetition count of two, and when detecting SSB beam 3 (SSB number 3) (that is, when terminal is located in cover area of SSB beam 3), terminal 200 selects a PRACH sequence (or RO) with the repetition count of one (that is, without Repetition).

In Embodiment 4, other processing and operations may be the same as those in Embodiment 1.

As described above, in the present embodiment, terminal 200 determines the number of repetitions of PRACH based on the detected SSB beam. Thus, it is possible to appropriately transmit PRACH using a large number of Repetitions as terminal 200 is located in an area of a beam that irradiates a position on the ground surface far from the satellite, thereby improving the received quality of PRACH in base station 100.

Further, base station 100 can configure the number of Repetitions for subsequent communication (Msg.3 PUSCH or Msg.4 HARQ-ACK) based on the number of Repetitions of the detected PRACH, and thus, terminal 200 can transmit Msg.3 PUSCH or Msg.4 HARQ-ACK with an appropriate number of Repetitions.

Note that, in Embodiment 4, a case where the number of repetitions of PRACH is selected based on the SSB number detected by terminal 200 has been described, but the present disclosure is not limited to this case. For example, at least one of the PRACH sequence, the RO, and the number of repetitions may be determined based on the SSB number detected by terminal 200.

Further, in a case where a plurality of SSBs are detected in terminal 200, the SSB number with the highest received power (or received quality such as received SNR) among the plurality of SSBs may be used.

Further, in a case where a satellite moves, such as in LEO, the cover area of each beam (SSB) on the ground surface also moves in accordance with the movement of the satellite when a signal is transmitted using a fixed beam from the satellite; thus, the distance between the satellite and the cover area of each beam does not change. In this case, a relationship between the SSB number and the number of repetitions of PRACH need not be changed in accordance with the movement of the satellite.

On the other hand, in a case where the directivity of each beam is controlled such that the beam covers the same area, the distance between the cover area of each beam and the satellite changes due to the movement of the satellite. In this case, base station 100 may update the relationship between the SSB number and the number of repetitions of PRACH as the satellite moves and may indicate the updated relationship via SIB to terminal 200, or may change the SSB number due to the movement of the satellite. When the SSB number is changed with the movement of the satellite, for example, in the example of FIG. 9, as the satellite moves away from an area of SSB beam 3, the beam that covers the area is changed to SSB beam 1, thereby enabling the selection of PRACH with a large number of repetitions in this area.

Further, base station 100 may indicate information on the number of Repetitions of Msg.3 PUSCH to terminal 200 in the same manner as in Embodiment 1. Similarly, base station 100 may indicate information on the number of repetitions of PUCCH used for the HARQ-ACK transmission for Msg.4 PDSCH to terminal 200 in the same manner as in Embodiment 1. The information on the number of repetitions may be, for example, indicated by a RACH response (or RAR, Msg.2) with respect to Msg.3 PDSCH, and may be indicated by DCI including the allocation of Msg.4 PDSCH with respect to PUCCH used for the HARQ-ACK transmission for Msg.4 PDSCH.

Alternatively, terminal 200 may determine (or select, configure) at least one of the number of Repetitions of Msg.3 PUSCH and the number of Repetitions of PUCCH used for the HARQ-ACK transmission for Msg.4 PDSCH in accordance with the determined PRACH resource (for example, PRACH sequence, RO, number of repetitions of PRACH). In this case, the information on the number of repetitions need not be indicated from base station 100 to terminal 200. Note that the number of repetitions of at least one of Msg.3 PUSCH and PUCCH for the HARQ-ACK transmission for Msg.4 is not limited to being determined based on the PRACH resource and may be determined based on an SSB beam (for example, SSB number) to be detected in terminal 200.

The embodiments of the present disclosure have been each described, thus far.

(Other Embodiments)

(1) In the above-described embodiments, a case has been described where the resource for initial access (for example, any of PRACH sequence, the number of repetitions of PRACH, and RO) is determined based on the location of terminal 200 and the location of the satellite, but the present disclosure is not limited to this case. For example, terminal 200 may select a resource for the initial access based on the location of terminal 200 and a reference location.

The reference location is, for example, a center location of a cell (or beam) on the ground surface, and is indicated from base station 100 to terminal 200 via SIB. In general, the further away from a cell center, the worse the directivity performance of the satellite beam become, which makes it more likely for the received signal quality to deteriorate. For this reason, the longer the distance between terminal 200 and the reference location is, the more PRACH resources (for example, PRACH sequences or ROs) for a large number of repetitions may be selected. Further, a PRACH resource (for example, PRACH sequence or RO) for which the number of repetitions of Msg.3 PUSCH or the number of repetitions of PUCCH used for the Msg.4 HARQ-ACK transmission becomes larger may be selected, as the distance between terminal 200 and the reference location becomes longer.

Further, the resource selection for initial access based on the reference location may be combined with at least one of Embodiments 1 to 4 (for example, resource selection for initial access based on satellite location). For example, the number of repetitions determined based on the satellite location may be further changed based on the reference location.

For example, in a case where the distance between terminal 200 and the reference location is larger than a predetermined threshold, a PRACH sequence for a larger number of repetitions (for example, twice the number of repetitions configured based on satellite location) may be selected. Further, in a case where the distance between terminal 200 and the reference location is equal to or less than the threshold, a PRACH sequence for the number of repetitions configured based on the satellite location may be selected, or a PRACH sequence for the number of repetitions less than the number of repetitions configured based on the satellite location may be selected. Note that the threshold may be indicated from base station 100 to terminal 200.

Thus, it is possible to select the number of repetitions while taking into account the directivity of the satellite beam. Note that the reference location may be a "referenceLocation" indicated via SIB 19.

(2) A PRACH resource (for example, any of PRACH sequence, the number of repetitions of PRACH, and RO) may be selected based on a polarization control capability of terminal 200.

In general, circular polarization (for example, Left hand circular polarization (LHCP) or Right hand circular polarization (RHCP)) is used in satellites, while linear polarization (for example, Vertical polarization (V-polarization) or Horizontal polarization (H-polarization)) is used in terminals for terrestrial cellular. For this reason, a loss of approximately 3 dB may occur when a signal transmitted from a terminal for a terrestrial cellular is received by a satellite.

For example, in a case where terminal 200 is capable of transmitting a polarization signal identical to the polarization used for reception by the satellite (or base station 100), the loss due to the difference in polarization is reduced. Accordingly, when terminal 200 is capable of transmitting the polarization signal identical to the polarization used for reception by the satellite (or base station 100), terminal 200 may select a PRACH resource (for example, PRACH sequence or RO) or the less number of PRACH repetitions. Further, when terminal 200 is capable of transmitting the polarization signal identical to the polarization used for reception by the satellite (or base station 100), terminal 200 may select a PRACH resource (for example, PRACH sequence or RO) for the less number of PRACH repetitions used for Msg.3 PUSCH or the less number of repetitions of PUCCH used for the Msg.4 HARQ-ACK transmission.

(3) Radio performance such as antenna gain, polarization, and modulation/demodulation accuracy varies depending on the implementation method of the terminal. In a case where these radio performances vary significantly for each terminal, there is a possibility that a large difference may occur in the relationship between the distance between the terminal and the satellite and the received quality, which may make it difficult to configure an appropriate number of repetitions for all terminals.

Accordingly, for example, the radio performance of the terminals may be defined, and then, the methods of the above-described embodiments may be applied to terminal 200 that satisfies the definition, or to terminal 200 that has been tested for these definitions. Further, for example, a plurality of levels of the radio performance may be defined, and terminal 200 may select PRACH with an individual (for example, different) number of repetitions for each of these radio performance levels. Further, for example, terminal 200 may select a PRACH sequence or the number of repetitions of PRACH taking into account at least the estimated value of the propagation loss, the antenna gain, and the polarization gain.

(4) The number of repetitions of PUCCH used for the Msg.4 HARQ-ACK transmission may be indicated to terminal 200 with the following methods, for example. In the following methods, the number of repetitions is indicated in the same format as DCI for a terrestrial network. Further, in order to maintain compatibility with Rels. 15, 16, and 17, the number of repetitions is indicated via DCI with the same number of bits as of DCI in Rels. 15, 16, and 17, without adding any additional bits for the repetition number indication.

<Method 1>

In Method 1, the number of repetitions of PUCCH used for the Msg.4 HARQ-ACK transmission is indicated using a reserved field in DCI format 1_0 used for indication of the resource allocation for Msg.4 PDSCH.

The reserved field may be composed of, for example, two bits of a downlink assignment index (DAI) field. In this case, with the two-bit reserved field, it is made possible to indicate any of four repetition counts (candidates) to terminal 200. Note that the four candidates for the number of repetitions may be indicated to terminal 200 via SIB.

Further, since the indication of the resource allocation for Msg.4 PDSCH is scrambled by TC-RNTI, terminal 200 may interpret the reserved field in DCI format 1_0 scrambled by TC-RNTI as an indication field for the number of repetitions described above. Note that the term "interpret" may be replaced with, for example, "specify," "judge," "determine," "decide," "calculate," or "understand."

<Method 2>

In Method 2, the number of repetitions of the PUCCH used for the Msg.4 HARQ-ACK transmission is indicated using a PUCCH Resource Indicator (PRI) field in DCI format 1_0 used for the indication of the resource allocation for Msg.4 PDSCH.

The PRI field is composed of three bits, and two bits of the three bits may be used for indication of the number of repetitions, and the remaining one bit may be used for indication of a PUCCH resource, for example. In this case, with the two bits of the PRI field, it is made possible to indicate any of the four repetition counts (candidates) to terminal 200. Note that, the four candidates for the number of repetitions may be indicated to terminal 200 via SIB.

Further, since the indication of the resource allocation for Msg.4 PDSCH is scrambled by TC-RNTI, terminal 200 may interpret the PRI field (for example, part of PRI field) scrambled by TC-RNTI in DCI format 1_0 as an indication field for the number of repetitions described above.

Note that, a frequency resource to be used for PUCCH is indicated to terminal 200 via PRI, and it is controlled such that PUCCHs of different terminals do not collide with each other. In Method 2, since the PRI field is used for the indication of the number of repetitions, the number of bits for PUCCH resource indication is reduced. However, the transmission of PUCCH used for the Msg.4 HARQ-ACK transmission is performed by a terminal that performs initial access and is not performed by terminals in other connection states; hence, the PUCCH collision between the terminal that transmits the Msg.4 HARQ-ACK and other terminals can be easily avoided by controlling PUCCH resources of the terminals in other connection states.

<Method 3>

In Method 3, the number of repetitions of PUCCH used for the Msg.4 HARQ-ACK transmission is indicated using a PDSCH-to-HARQ-timing-indicator field in DCI format 1_0 used for the indication of the resource allocation for Msg.4 PDSCH.

The PDSCH-to-HARQ-timing-indicator field is composed of three bits, and two bits of the three bits may be used for indication of the number of repetitions, and the remaining one bit may be used for indication of information on a timing relationship between PDSCH and the HARQ feedback, for example. In this case, with the two bits of the PDSCH-to-HARQ-timing-indicator field, it is made possible to indicate any of the four repetition counts (candidates) to terminal 200. Note that, the four candidates for the number of repetitions may be indicated to terminal 200 via SIB.

Further, since the indication of the resource allocation for Msg.4 PDSCH is scrambled by TC-RNTI, terminal 200 may interpret the PDSCH-to-HARQ-timing-indicator field (for example, part of PDSCH-to-HARQ-timing-indicator field) in DCI format 1_0 scrambled by TC-RNTI as an indication field for the number of repetitions described above.

Note that, a time resource to be used for PUCCH is indicated to terminal 200 via the PDSCH-to-HARQ-timing-indicator, and it is controlled to avoid a downlink slot in the case of a TDD (Time Domain Duplex) system or to prevent PUCCHs of different terminals from colliding with each other. In Method 3, since the PDSCH-to-HARQ-timing-indicator field is used for the indication of the number of repetitions, the number of bits for PUCCH resource indication is reduced. In NTN, however, a Frequency Domain Duplex (FDD) system is mainly used, and thus, the control to avoid a downlink slot need not be performed. Further, the transmission of PUCCH used for the Msg.4 HARQ-ACK transmission is performed by a terminal that performs initial access and is not performed by terminals in other connection states; hence, the PUCCH collision between the terminal that transmits the Msg.4 HARQ-ACK and other terminals can be easily avoided by controlling PUCCH resources of the terminals in other connection states.

<Method 4>

In Method 4, the number of repetitions of PUCCH used for the Msg.4 HARQ-ACK transmission is indicated using a Transmit Power Control (TPC) field in DCI format 1_0 used for the indication of the resource allocation for Msg.4 PDSCH.

The TPC field is composed of two bits, and one bit of the two bits may be used for indication of the number of repetitions, and the remaining one bit may be used for indication of TPC information, for example. In this case, with the one bit of the TPC field, it is made possible to indicate either of two repetition counts (candidates) to terminal 200. Note that, the two candidates for the number of repetitions may be indicated to terminal 200 via SIB. Alternatively, all of the two bits of the TPC field may be used for the indication of the number of repetitions. In this case, terminal 200 may transmit PUCCH at maximum power without performing transmission power control, with the TPC bit.

Further, since the indication of the resource allocation for Msg.4 PDSCH is scrambled by TC-RNTI, terminal 200 may interpret the TPC field (for example, part of TPC field) in DCI format 1_0 scrambled by TC-RNTI as an indication field for the number of repetitions described above.

Note that transmission power for PUCCH is controlled by TPC to reduce interference to adjacent cells. In Method 4, since the TPC field is used for the indication of the number of repetitions, the number of bits for the PUCCH transmission power control is reduced. However, the transmission of PUCCH for the Msg.4 HARQ-ACK transmission is performed by a terminal that performs initial access and is not performed by terminals in other connection states; hence, a repetition indication is made infrequently, and even when the PUCCH transmission is performed with a large transmission power, an impact on the interference with adjacent cells. Further, in NTN, since the communication is over a long distance, it is considered that most terminals transmit at the maximum power, and the impact is small even without the transmission power control by the TPC field.

Methods 1 to 4 have been each described, thus far.

Note that the possibility that all terminals perform the repetition transmission of PUCCH through which Msg.4 HARQ-ACK is transmitted is low. For this reason, for example, terminal 200 that has selected a PRACH sequence (or RO) in a specific range from among a plurality of PRACH sequences (or ROs) may receive information on the number of repetitions by replacing a certain field of DCI based on any of Methods 1 to 4. The range of the above PRACH sequence (or RO) may be indicated to terminal 200 via SIB.

Further, each of Methods 1 to 4 can be used in combination with any of the above-described embodiments.

Further, the DCI format, the DCI field, and the number of bits in the field used for indication of the number of repetitions of the PUCCH used for the Msg.4 HARQ-ACK transmission are not limited to the examples described above and may be other formats, fields, or other numbers of bits. Further, the number of bits used for the indication of the number of repetitions of PUCCH used for the Msg.4 HARQ-ACK transmission is not limited to the example described above and may be other numbers of bits. Further, the type of RNTI used for scrambling DCI used for the indication of the number of repetitions of PUCCH used for the Msg.4 HARQ-ACK transmission is not limited to TC-RNTI and may be other RNTIs.

The other embodiments have been each described, thus far.

Note that, in an embodiment of the present disclosure, the same PRACH sequence in different ROs may be treated as different sequences. Alternatively, the PRACH sequence may be a sequence over multiple ROs.

Further, the repetition transmission may be a plurality of times of transmission of the same modulation signal, or may be a plurality of times of transmission of signals to which different modulations or encodings are applied for the same data.

Further, the number of times of repetition transmission (number of repetitions, repetition count) indicates the number of times a signal is transmitted, and the repetition count of one may be read as "no repetition transmission."

Further, the PRACH sequence may be, for example, a root sequence or a CS sequence. Further, the PRACH sequence may be replaced with a RACH resource called RO.

Further, in the above-described embodiments, a case has been described where the information on mapping between parameters such as a distance, a TA value, and an SSB number and resources for initial access (for example, PRACH sequence, RO, or number of repetitions) is indicated from base station 100 to terminal 200 via SIB, and terminal 200 selects a PRACH sequence based on the mapping, but the present disclosure is not limited to this case. For example, the information on the mapping between the parameters such as the distance, the TA value, and the SSB number and ranges (or groups) of the resources for the initial access (for example, PRACH sequence, RO, or number of repetitions) may be indicated from base station 100 to terminal 200 via SIB. For example, terminal 200 may randomly select a resource from the ranges of resources (for example, PRACH sequence, RO, or number of repetitions) for the initial access to be indicated.

An exemplary embodiment of the present disclosure is applicable to satellite communication of different types of a low earth orbit (LEO) satellite, a medium earth orbit (MEO) satellite, a highly elliptical orbit (HEO) satellite, or a geostationary earth orbit (GEO) satellite, each having a different altitude from the ground. For example, information indicating a relationship between a distance between terminal 200 and a satellite and a resource for initial access (for example, PRACH sequence or number of repetitions) in Embodiments 1 and 2, and information indicating a relationship between a TA value and a resource for initial access (for example, PRACH sequence or number of repetitions) in Embodiment 3 may be individually configured for each of the types of satellite (or each of altitudes of satellites).

In the above-described embodiments, a case has been described where terminal 200 selects a PRACH sequence or the number of repetitions of PRACH, and base station 100 identifies, configures, and/or indicates, to terminal 200, the number of Repetitions required for Msg.3 PUSCH and/or PUCCH used for the HARQ-ACK transmission for Msg.4 PDSCH, from the detected PRACH sequence or number of repetitions of PRACH, but the present disclosure is not limited to this case. For example, terminal 200 may select PRACH from a specific PRACH sequence when terminal 200 supports a Repetition of a PUCCH used for the HARQ-ACK transmission for Msg.4 PDSCH or when the terminal determines that the Repetition transmission is necessary based on the location information or the received quality. The specific PRACH sequence may be indicated to terminal 200 from base station 100 via SIB. When detecting PRACH in a specific PRACH sequence, base station 100 may instruct terminal 200, via Msg.2, to include information on the number of Repetitions in Msg.3 PUSCH, and terminal 200 may indicate, to base station 100 in Msg.3 PUSCH, the information on the number of Repetitions of PUCCH used for the HARQ-ACK transmission for Msg.4 PDSCH. In general, the amount of information that can be indicated via PUSCH such as Msg.3 is larger than the amount of information that can be indicated by the selection of a PRACH sequence. For this reason, the indication of the information on the number of Repetitions to base station 100 by terminal 200 in Msg.3 PUSCH makes it possible to indicate a larger number of candidates for the number of Repetitions.

In the above-described embodiments, the operation based on the 4-step random access procedure (for example, 4-step RACH procedure) has been described, but the random access procedure may be a 2-step random access procedure (also referred to as, for example, 2-step RACH or Type-2 random access procedure). In the case of 2-step RACH, a sequence or the number of repetitions of an uplink signal (for example, at least one of PRACH and PUSCH) transmitted as MsgA may be selected based on the information on the location (or distance), TA value, or SSB described in any of Embodiments 1 to 4 in terminal 200. Further, in the case of 2-step RACH, PUCCH for HARQ-ACK for Msg.4 in any of Embodiments 1 to 4 may be read as PUCCH for HARQ-ACK for MsgB.

In the above-described embodiments, a case has been described where the number of repetitions is individually determined for Msg.3 PUSCH and PUCCH for HARQ-ACK for Msg.4 and is indicated to terminal 200, but the present disclosure is not limited to this case. For example, the number of repetitions of PUCCH for HARQ-ACK for Msg.4 need not be indicated. In this case, for example, terminal 200 may transmit PUCCH for HARQ-ACK for Msg.4 using the same number of Repetitions as the number of Repetitions indicated for Msg.3 PUSCH. Alternatively, terminal 200 may transmit PUCCH for HARQ-ACK for Msg.4 using the number of Repetitions determined based on the number of Repetitions indicated for Msg.3 PUSCH, for example. For example, a relationship between the number of Repetitions of Msg.3 PUSCH and the number of Repetitions of PUCCH for HARQ-ACK for Msg.4 may be indicated from base station 100 to terminal 200 via SIB with an offset or a scaling factor. The offset may be, for example, information on a difference between the number of Repetitions of Msg.3 PUSCH and the number of Repetitions of PUCCH for HARQ-ACK for Msg.4. The scaling factor may be, for example, information on a ratio of the number of Repetitions of Msg.3 PUSCH to the number of Repetitions of PUCCH for HARQ-ACK for Msg.4. Further, information on a combination of the number of Repetitions of Msg3 PUSCH and the number of Repetitions of PUCCH for HARQ-ACK for Msg.4 may be indicated via the RAR UL grant, which is the Msg.3 PUSCH scheduling information in the RACH response (RAR). For example, the above information on the combination may be indicated in an MCS field of the RAR UL grant. Further, a candidate for the combination of the number of Repetitions of Msg3 PUSCH and the number of Repetitions of PUCCH for HARQ-ACK for Msg.4 may be indicated via SIB. This makes it possible to reduce the amount of information for indicating the number of Repetitions of PUCCH for HARQ-ACK for Msg.4. Note that the number of repetitions of PUCCH for HARQ-ACK for Msg.4 may be indicated, and the number of repetitions for Msg.3 PUSCH may not be indicated.

In the above embodiment, PUCCH for HARQ-ACK for Msg.4 may be replaced with PUCCH including HARQ-ACK information for PDSCH of which the scheduling is indicated by the DCI in which the CRC portion is scrambled by the TC-RNTI.

Further, in the above-described embodiments, the satellite ephemeris information, which is information on a satellite location, may be broadcast by the system information or held by terminal 200 in advance. The satellite ephemeris information may be updated when communication is possible. Alternatively, terminal 200 may identify a satellite location using information that is different from the satellite ephemeris information.

Further, in the embodiments described above, an example has been described in which a GNSS such as GPS or the like (e.g., location detection using satellite signal) is used, but the present disclosure is not limited to this, and the following may be performed: location detection by a terrestrial cellular base station; location detection using WiFi (registered trademark) signal or Bluetooth (registered trademark) signal; location detection using an acceleration sensor or the like; or location detection by a combination of these detection methods, for example. Incidentally, altitude information may be acquired from, for example, an atmospheric pressure sensor.

Further, in the above-described embodiments, a cell may be an area defined by received power of an SSB or a Channel State Information-Reference Signal (CSI-RS) transmitted from a base station (or satellite) or may be an area defined by a geographical location. Moreover, the cell in the above-described embodiments may be replaced with a beam defined by the SSB.

Further, in each of the embodiments described above, PRACH, Msg.3 PDSCH, and PUCCH used for the HARQ-ACK transmission for Msg.4 PDSCH have been described as examples of uplink channels subject to the repetition, but the channels or signals subject to the repetition are not limited to these. For example, the uplink channels or signals subject to the repetition may be other channels or signals used for transmission before a higher layer configuration specific to terminal 200 (terminal-individual RRC configuration) is performed.

Further, at least two of the embodiments described above may be combined. For example, the PRACH resource, the resource for Msg.3 PDSCH, and the resource for PDSCH used for the HARQ-ACK transmission for Msg.4 PDSCH may be individually configured based on, respectively, different parameters among the three types of parameters, which are the distance between terminal 200 and the satellite, the TA value, and the SSB beam. Alternatively, for example, the PRACH resource, the resource for Msg.3 PDSCH, and the resource for PDSCH used for the HARQ-ACK transmission for Msg.4 PDSCH may be configured based on a combination of the different parameters among the three types of parameters, which are the distance between terminal 200 and the satellite, the TA value, and the SSB beam.

Further, the satellite ephemeris information and the common TA parameter information may be, for example, indicated as "EpochTime" and "TAInfo" in NTN-Config of SIB19, respectively.

Further, in the above-described embodiments, a base station may be replaced with a "network."

Further, in the above-described embodiments, terminal 200 may perform the received quality measurement by using other signals such as a CSI-RS, instead of the SSB signal.

Further, in the above-described embodiments, the uplink transmission from terminal 200 to base station 100 has been described, but an embodiment of the present disclosure is not limited to this and may be applied to data in a downlink from base station 100 to terminal 200 or in a link between terminals 200 (e.g., sidelink). Further, in the above-described embodiments, the transmission of a signal during initial access has been described as an example of the uplink transmission, but the transmission target is not limited to the signal during the initial access and may be other signals or channels.

Further, an embodiment of the present disclosure is also applicable for any type of satellite such as a GEO, a MEO, LEO, or HEO. Further, an embodiment of the present disclosure may be applied to non-terrestrial communication such as communication performed by a HAPS or a drone base station.

Further, in the above embodiments, descriptions have been given by taking the NTN environment (e.g., satellite communication environment) as an example, but the present disclosure is not limited to this. The present disclosure may be applied to other communication environments (e.g., at least one terrestrial cellular environment in LTE and NR). For example, an embodiment of the present disclosure may be applied to terrestrial communication in an environment where the cell size is large and the propagation delay between base station 100 and terminal 200 is longer (e.g., equal to or longer than threshold), for example.

Further, in the above-described embodiment, the satellite communication may have a configuration in which the base station functionality is on the satellite (e.g., "regenerative satellite"), or a configuration in which the base station functionality is on the ground and the satellite relays the communication between the base station and a terminal (e.g., "transparent satellite"). In other words, in an embodiment of the present disclosure, for example, the downlink and uplink may be a link between a terminal and the satellite or a link via the satellite.

The parameters in the above-described embodiments are examples and may include other values. For example, the PRACH sequence number, RO number, the distance between terminal 200 and the satellite, the number of repetitions, the SSB number, and the number of SSBs are not limited to the values given in the above-mentioned examples.

A method for indicating control information from base station 100 to terminal 200 is not limited to the above-mentioned examples, and the control information may be indicated (or broadcast, instructed, configured) by at least one of system information such as an MIB and an SIB, RRC control information, MAC control information, and downlink control information (DCI), may be previously configured for terminal 200, or may be defined by standards in advance.

The base station may be referred to as a gNodeB or a gNB. Further, the terminal may be referred to as UE.

Time resource units, such as system frames or subframes, may be replaced with slots, time slots, mini slots, frames, or subframes.

Further, any component with a suffix, such as "-er," "-or," or "-ar" in the above-described embodiments may be replaced with other terms such as "circuit (circuitry)," "device," "unit," or "module."

(Supplement)

Information indicating whether terminal 200 supports the functions, operations, or processing described in the above embodiments may be transmitted (or indicated) from terminal 200 to base station 100 as capability information or capability parameter(s) of terminal 200, for example.

The capability information may include an information element (IE) individually indicating whether terminal 200 supports at least one of the functions, operations, and processing described in the above embodiments. Alternatively, the capability information may include an information element indicating whether terminal 200 supports a combination of any two or more of the functions, operations, and processing described in the above embodiments.

Base station 100, for example, may determine (decide or assume), based on the capability information received from terminal 200, the functions, operations, and processing supported (or unsupported) by terminal 200 that has transmitted the capability information. Base station 100 may perform operations, processing, or control in accordance with a determination result based on the capability information. For example, base station 100 may control communication for NTN, based on the capability information received from terminal 200.

Note that the fact that terminal 200 does not support some of the functions, operations, or processing described in the above embodiment may be interpreted as limitation on such functions, operations, or processing in terminal 200. For example, information or a request related to such limitation may be indicated to base station 100.

Information on the capability or limitation of terminal 200 may be, for example, defined by standards, or implicitly indicated to base station 100 in association with information known in base station 100 or information transmitted to base station 100.

(Control Signal)

In the present disclosure, a downlink control signal (or downlink control information) related to an exemplary embodiment of the present disclosure may be a signal (or information) transmitted through a Physical Downlink Control Channel (PDCCH) of the physical layer, for example, or may be a signal (or information) transmitted through a Medium Access Control Control Element (MAC CE) or the Radio Resource Control (RRC) of a higher layer. Further, the signal (or information) is not limited to that indicated by the downlink control signal, but may be predefined in the specifications (or standard) or may be pre-configured for the base station and the terminal.

In the present disclosure, an uplink control signal (or uplink control information) relating to an exemplary embodiment of the present disclosure may be, for example, a signal (or information) transmitted through a PUCCH of the physical layer or a signal (or information) transmitted through the MAC CE or RRC of the higher layer. Further, the signal (or information) is not limited to that indicated by the uplink control signal, and may be predefined in the specifications (or standard) or may be pre-configured for the base station and the terminal. The uplink control signal may be replaced with, for example, uplink control information (UCI), 1st stage sidelink control information (SCI), or 2nd stage SCI.

(Base Station)

In an exemplary embodiment of the present disclosure, the base station may be a Transmission Reception Point (TRP), a cluster head, an access point, a Remote Radio Head (RRH), an eNodeB (eNB), a gNodeB (gNB), a Base Station (BS), a Base Transceiver Station (BTS), a master device, a gateway, or the like. Further, in sidelink communication, a terminal may play a role of the base station. Alternatively, the base station may be replaced with a relay device that relays communication between a higher node and a terminal, or may be replaced with a roadside device.

(Uplink/Downlink/Sidelink)

An exemplary embodiment of the present disclosure may be applied to, for example, any of uplink, downlink, and sidelink. For example, an exemplary embodiment of the present disclosure may be applied to a Physical Uplink Shared Channel (PUSCH), a Physical Uplink Control Channel (PUCCH), and a Physical Random Access Channel (PRACH) in the uplink, a Physical Downlink Shared Channel (PDSCH), PDCCH or a Physical Broadcast Channel (PBCH) in the downlink, or a Physical Sidelink Shared Channel (PSSCH), a Physical Sidelink Control Channel (PSCCH), a Physical Sidelink Broadcast Channel (PSBCH) in the sidelink.

Note that PDCCH, PDSCH, PUSCH and PUCCH are examples of a downlink control channel, a downlink data channel, an uplink data channel, and an uplink control channel, respectively. PSCCH and PSSCH are examples of a sidelink control channel and a sidelink data channel. Further, PBCH and PSBCH are examples of broadcast channels, and PRACH is an example of a random access channel.

(Data Channel/Control Channel)

An exemplary embodiment of the present disclosure may be applied to, for example, either of a data channel or a control channel. For example, a channel in an exemplary embodiment of the present disclosure may be replaced with a data channel including any of PDSCH, PUSCH, and PSSCH or a control channel including any of PDCCH, PUCCH, PBCH, PSCCH, and PSBCH.

(Reference Signal)

In an exemplary embodiment of the present disclosure, a reference signal is a signal known to both of a base station and a mobile station, for example, and may also be referred to as a Reference Signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

(Time Intervals)

In an exemplary embodiment of the present disclosure, the units of time resources are not limited to one or a combination of slots and symbols, but may be, for example, time resource units such as frames, superframes, subframes, slots, time-slot subslots, minislots, or symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the above-described embodiments, and may be another number of symbols.

(Frequency Band)

An exemplary embodiment of the present disclosure may be applied to either a licensed band or an unlicensed band.

(Communication)

An exemplary embodiment of the present disclosure may be applied to any of communication between a base station and a terminal (Uu-link communication), communication between a terminal and a terminal (Sidelink communication), and Vehicle to Everything (V2X) communication. For example, a channel in an exemplary embodiment of the present disclosure may be replaced with any of PSCCH, PSSCH, Physical Sidelink Feedback Channel (PSFCH), PSBCH, PDCCH, PUCCH, PDSCH, PUSCH, and PBCH.

In addition, an exemplary embodiment of the present disclosure may be applied to either of a terrestrial network or a network other than the terrestrial network (Non-Terrestrial Network (NTN)) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

In an exemplary embodiment of the present disclosure, an antenna port refers to a logical antenna (antenna group) formed of one physical antennas or a plurality of physical antennas. For example, the antenna port does not necessarily refer to one physical antenna, and may refer to an array antenna formed of multiple antennas or the like. For example, it is not defined how many physical antennas from the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 10 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/$km^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

FIG. 11 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

FIG. 12 illustrates some interactions between a UE, gNB, and AMF (a 5GC Entity) performed in the context of a transition of the UE from RRC_IDLE to RRC_CONNECTED for the NAS part (see TS 38 300 v15.6.0).

RRC is higher layer signaling (protocol) used for UE and gNB configuration. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityMode-Command message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL

CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

FIG. 13 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 13 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few μs (where the value can be one or a few μs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 12. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

FIG. 14 illustrates a 5G NR non-roaming reference architecture (see TS 23.501 v16.1.0, section 4.23). An Application Function (AF) ( e.g., an external application server hosting 5G services, exemplarily described in FIG. 13) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 14 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to one exemplary embodiment of the present disclosure includes: control circuitry, which, in operation, determines a resource for an uplink channel based on information on a location of the terminal; and transmission circuitry, which, in operation, transmits a signal for the uplink channel using the resource.

In one exemplary embodiment of the present disclosure, the resource is at least one of a sequence used for a random access channel, a transmission opportunity for the random access channel, and/or the number of repetitions of a signal transmitted in a random access procedure.

In one exemplary embodiment of the present disclosure, the uplink channel is at least one of a random access channel used for Message 1 or Message A, an uplink data channel used for Message 3, and/or an uplink control channel used for a response to Message 4, in a random access procedure.

In one exemplary embodiment of the present disclosure, the uplink channel is a channel used for transmission before a higher layer configuration specific to the terminal is performed.

In one exemplary embodiment of the present disclosure, the information on the location includes at least one of location information acquired by the terminal, information on a distance between the terminal and a satellite, information on a distance between the terminal and a reference location, information on a beam corresponding to a synchronization signal block received by the terminal, and/or information on a timing advance value calculated based on the location of the terminal and a location of the satellite.

A base station according to one exemplary embodiment of the present disclosure includes: control circuitry, which, in operation, determines a certain resource for an uplink channel based on a first resource for the uplink channel, the first resource being determined based on information on a location of a terminal, the certain resource being referred to as a second resource; and reception circuitry, which, in operation, receives a signal for the uplink channel using the second resource.

A communication method according to one exemplary embodiment of the present disclosure includes: determining, by a terminal, a resource for an uplink channel based on information on a location of the terminal; and transmitting, by the terminal, a signal for the uplink channel using the resource.

A communication method according to one exemplary embodiment of the present disclosure includes: determining, by a base station, a certain resource for an uplink channel based on a first resource for the uplink channel, the first resource being determined based on information on a location of a terminal, the certain resource being referred to as a second resource; and receiving, by the base station, a signal for the uplink channel using the second resource.

The disclosure of Japanese Patent Application No. 2022-158612, filed on September 30, 2022, including the specification, drawings and abstract, is incorporated herein by reference in its entirety.

Industrial Applicability

An aspect of the present disclosure is useful for radio communication systems.

Reference Signs List

100 Base station
101, 201 Antenna
102, 202 Radio receiver
103 PUSCH reception processor
104 PUCCH reception processor
105 PRACH reception processor
106 Data generator
107 Controller
108 Data transmission processor
109, 209 Radio transmitter
200 Terminal
203 Data reception processor
204 Controller
205 Timing adjuster
206 PUSCH transmission processor
207 PUCCH transmission processor
208 PRACH transmission processor

## Claims

**1.** A terminal, comprising:

control circuitry, which, in operation, determines a resource for an uplink channel based on information on a location of the terminal; and
transmission circuitry, which, in operation, transmits a signal for the uplink channel using the resource.

**2.** The terminal according to claim 1, wherein the resource is at least one of a sequence used for a random access channel, a transmission opportunity for the random access channel, and/or the number of repetitions of a signal transmitted in a random access procedure.

**3.** The terminal according to claim 1, wherein the uplink channel is at least one of a random access channel used for Message 1 or Message A, an uplink data channel used for Message 3, and/or an uplink control channel used for a response to Message 4, in a random access procedure.

**4.** The terminal according to claim 1, wherein the uplink channel is a channel used for transmission before a higher layer configuration specific to the terminal is performed.

**5.** The terminal according to claim 1, wherein the information on the location includes at least one of location information acquired by the terminal, information on a distance between the terminal and a satellite, information on a distance between the terminal and a reference location, information on a beam corresponding to a synchronization signal block received by the terminal, and/or information on a timing advance value calculated based on the location of the terminal and a location of the satellite.

**6.** A base station, comprising:

control circuitry, which, in operation, determines a certain resource for an uplink channel based on a first resource for the uplink channel, the first resource being determined based on information on a location of a terminal, the certain resource being referred to as a second resource; and
reception circuitry, which, in operation, receives a signal for the uplink channel using the second resource.

**7.** A communication method, comprising:

determining, by a terminal, a resource for an uplink channel based on information on a location of the terminal; and
transmitting, by the terminal, a signal for the uplink channel using the resource.

**8.** A communication method, comprising:

determining, by a base station, a certain resource for an uplink channel based on a first resource for the uplink channel, the first resource being determined based on information on a location of a terminal, the certain resource being referred to as a second resource; and
receiving, by the base station, a signal for the uplink channel using the second resource.

**9.** An integrated circuit configured to control processing of a terminal, the processing comprising:

determining a resource for an uplink channel based on information on a location of the terminal; and
transmitting a signal for the uplink channel using the resource.

**10.** An integrated circuit configured to control processing of a base station, the processing comprising:

determining a certain resource for an uplink channel based on a first resource for the uplink channel, the first resource being determined based on information on a location of a terminal, the certain resource being referred to as a second resource; and
receiving a signal for the uplink channel using the second resource.

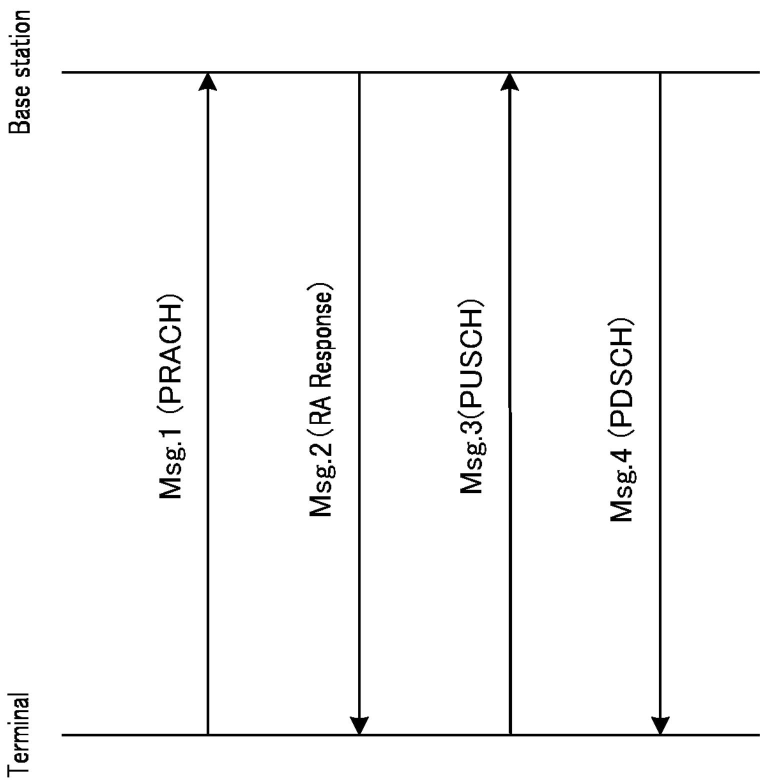
Base station
Terminal
Msg.1 (PRACH)
Msg.2 (RA Response)
Msg.3(PUSCH)
Msg.4 (PDSCH)

FIG. 1

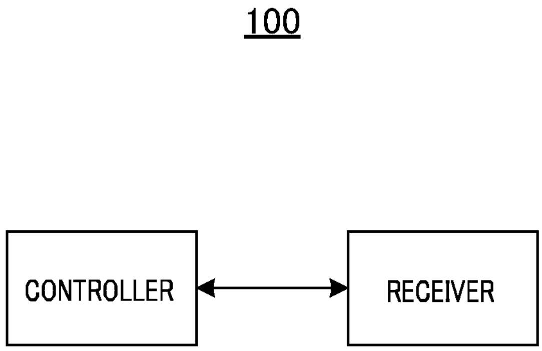


FIG. 2

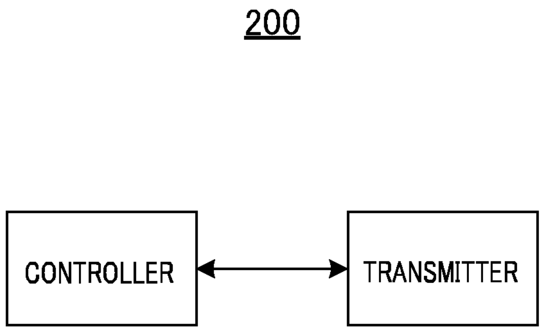


FIG. 3

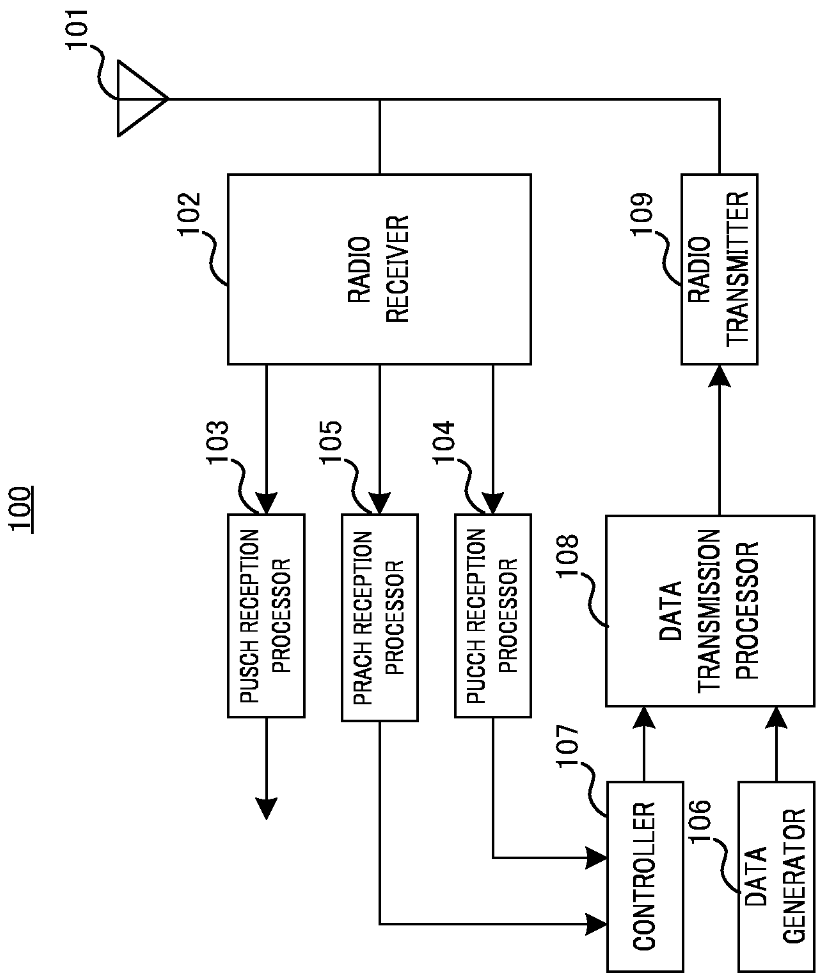
100
101
102
RADIO RECEIVER
103
PUSCH RECEPTION PROCESSOR
105
PRACH RECEPTION PROCESSOR
104
PUCCH RECEPTION PROCESSOR
107
CONTROLLER
106
DATA GENERATOR
108
DATA TRANSMISSION PROCESSOR
109
RADIO TRANSMITTER

FIG. 4

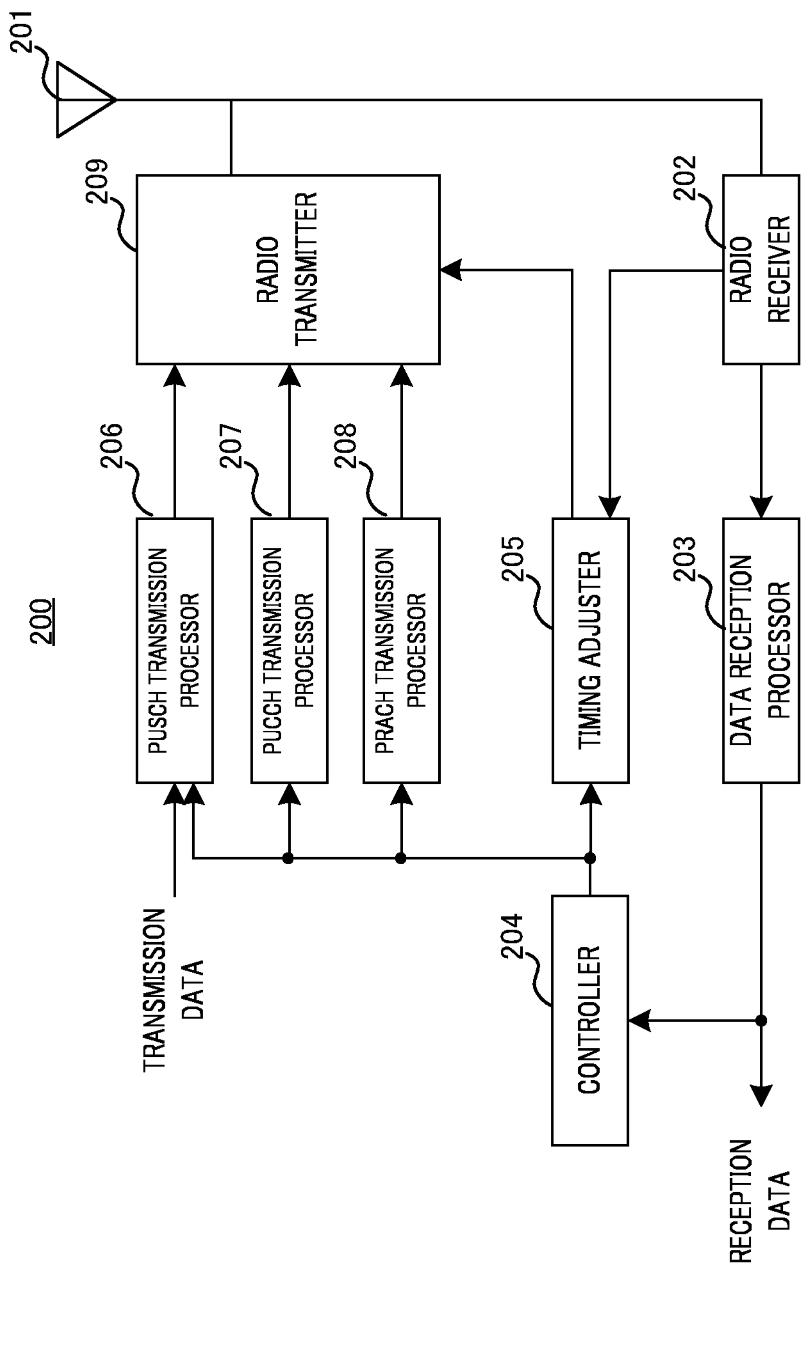
200
201
209
RADIO TRANSMITTER
202
RADIO RECEIVER
206
PUSCH TRANSMISSION PROCESSOR
207
PUCCH TRANSMISSION PROCESSOR
208
PRACH TRANSMISSION PROCESSOR
205
TIMING ADJUSTER
203
DATA RECEPTION PROCESSOR
TRANSMISSION DATA
204
CONTROLLER
RECEPTION DATA

FIG. 5

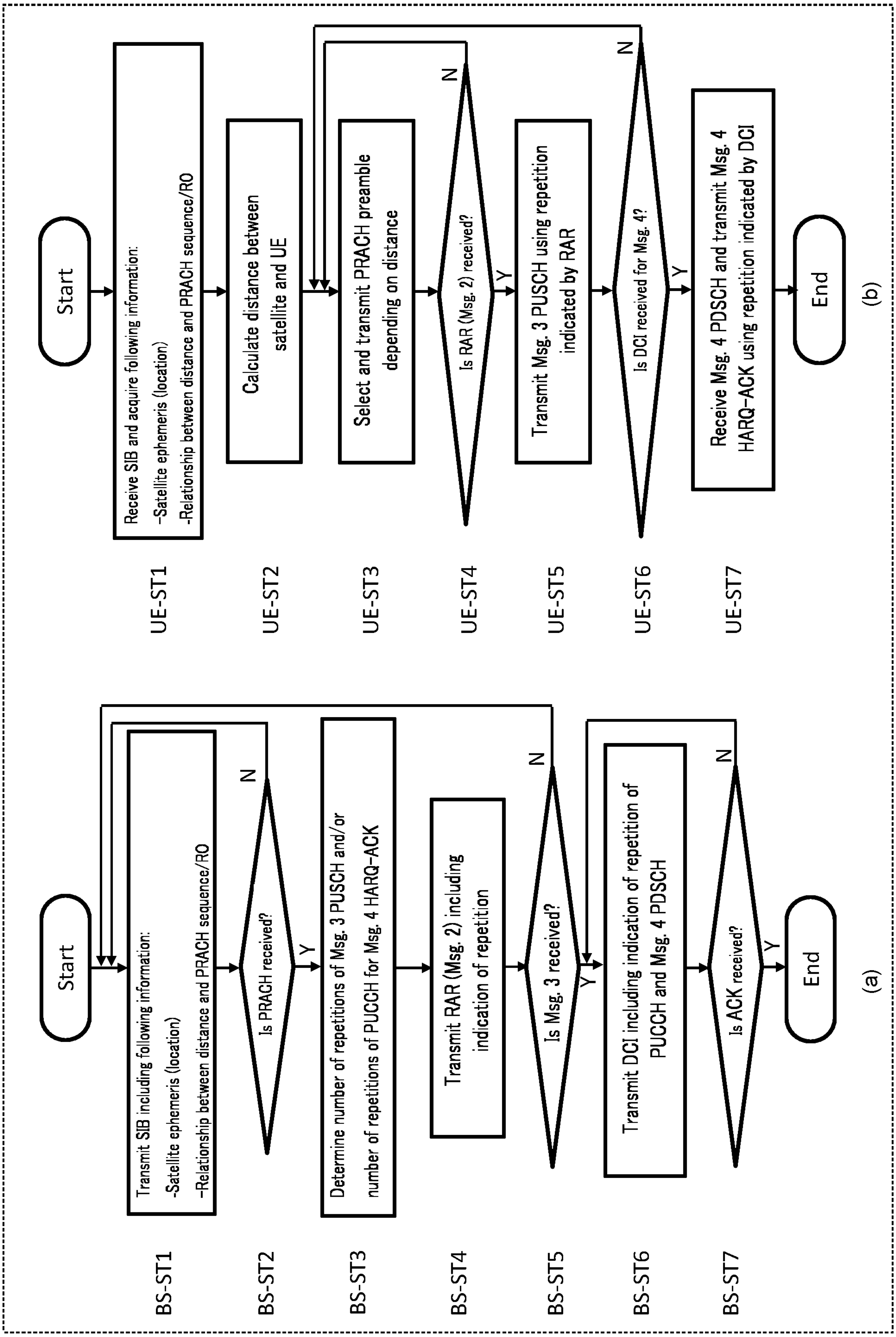
Start
Transmit SIB including following information:
-Satellite ephemeris (location)
-Relationship between distance and PRACH sequence/RO
Is PRACH received?
N
Y
Determine number of repetitions of Msg. 3 PUSCH and/or number of repetitions of PUCCH for Msg. 4 HARQ-ACK
Transmit RAR (Msg. 2) including indication of repetition
Is Msg. 3 received?
N
Y
Transmit DCI including indication of repetition of PUCCH and Msg. 4 PDSCH
Is ACK received?
N
Y
End
(a)
BS-ST1
BS-ST2
BS-ST3
BS-ST4
BS-ST5
BS-ST6
BS-ST7
Start
Receive SIB and acquire following information:
-Satellite ephemeris (location)
-Relationship between distance and PRACH sequence/RO
Calculate distance between satellite and UE
Select and transmit PRACH preamble depending on distance
Is RAR (Msg. 2) received?
N
Y
Transmit Msg. 3 PUSCH using repetition indicated by RAR
Is DCI received for Msg. 4?
N
Y
Receive Msg. 4 PDSCH and transmit Msg. 4 HARQ-ACK using repetition indicated by DCI
End
(b)
UE-ST1
UE-ST2
UE-ST3
UE-ST4
UE-ST5
UE-ST6
UE-ST7

FIG. 6

| PRACH sequence (or RO) | Distance (km) |
|---|---|
| 0-15 | 600-749 |
| 16-31 | 750-899 |
| 32-47 | 900-1049 |
| 48-63 | 1050-1199 |

FIG. 7

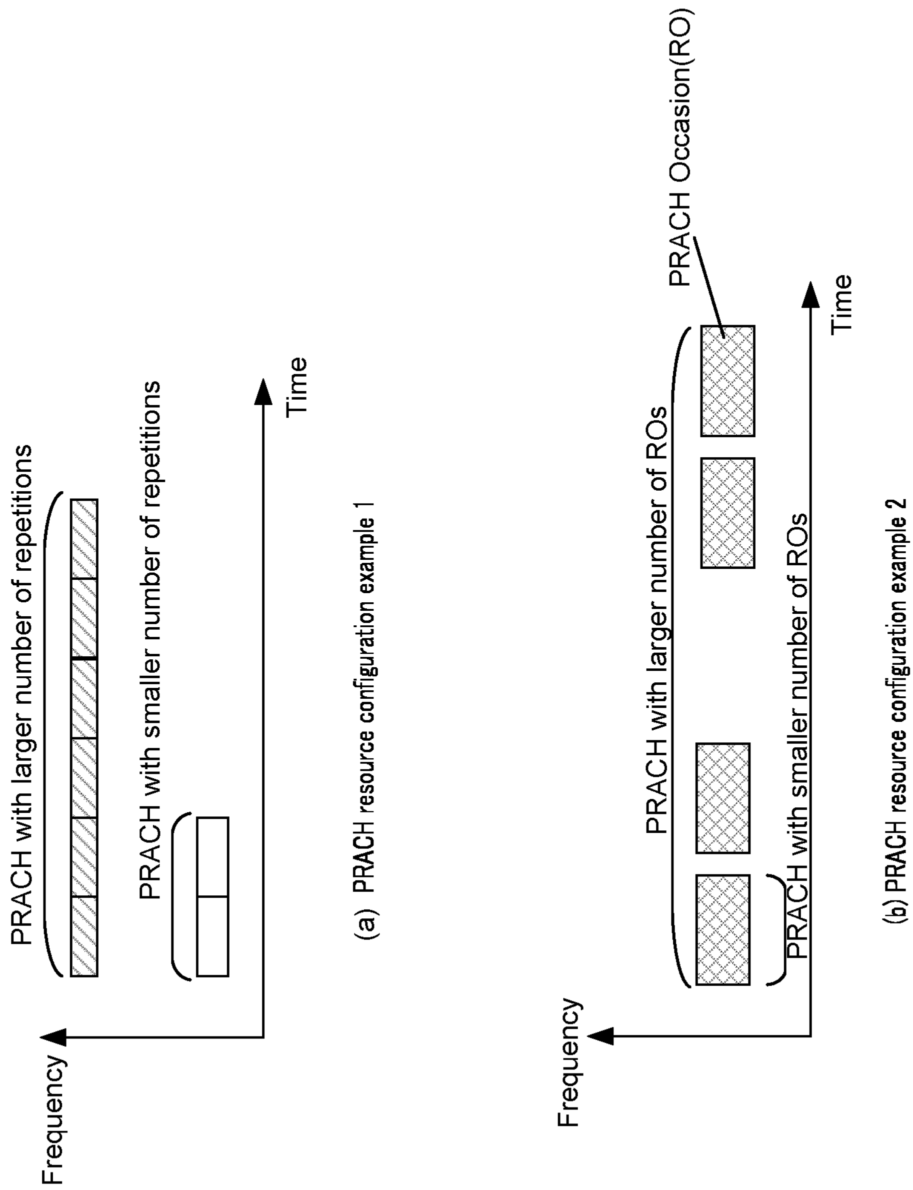
PRACH with larger number of repetitions
PRACH with smaller number of repetitions
Frequency
Time
(a) PRACH resource configuration example 1
PRACH Occasion(RO)
PRACH with larger number of ROs
PRACH with smaller number of ROs
Frequency
Time
(b) PRACH resource configuration example 2

FIG. 8

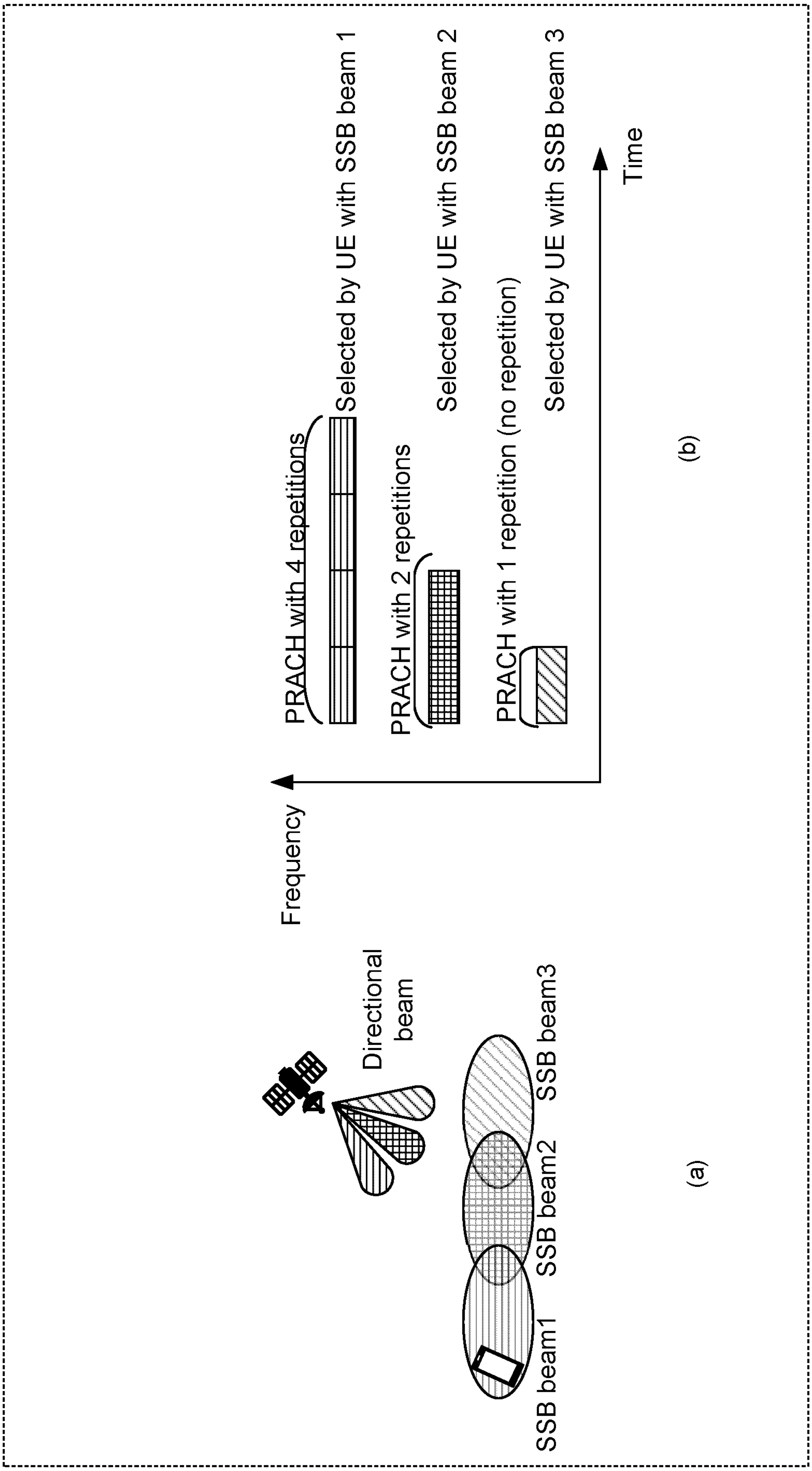
Directional beam
SSB beam1
SSB beam2
SSB beam3
(a)
Frequency
Time
PRACH with 4 repetitions
Selected by UE with SSB beam 1
PRACH with 2 repetitions
Selected by UE with SSB beam 2
PRACH with 1 repetition (no repetition)
Selected by UE with SSB beam 3
(b)

FIG. 9

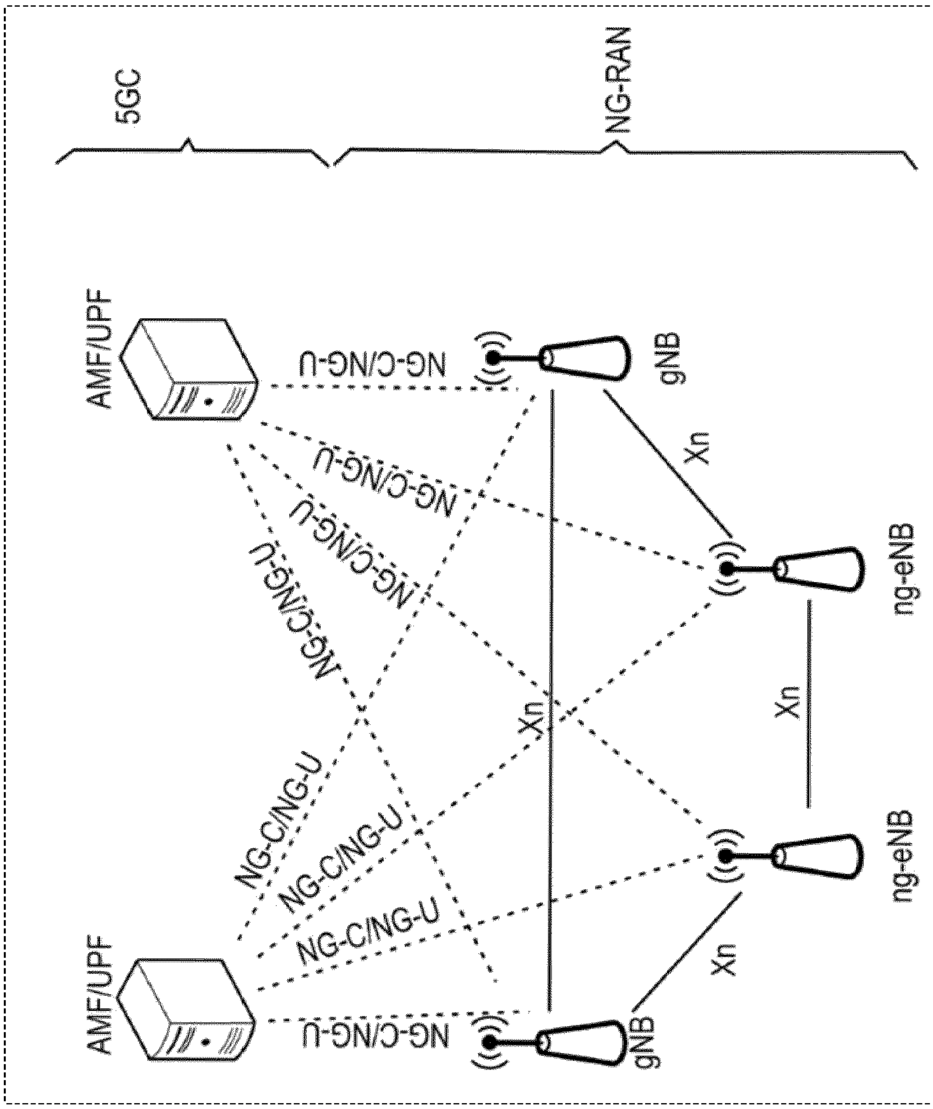
5GC
NG-RAN
AMF/UPF
AMF/UPF
NG-C/NG-U
NG-C/NG-U
NG-C/NG-U
NG-C/NG-U
NG-C/NG-U
NG-C/NG-U
NG-C/NG-U
NG-C/NG-U
gNB
gNB
ng-eNB
ng-eNB
Xn
Xn
Xn
Xn

FIG. 10

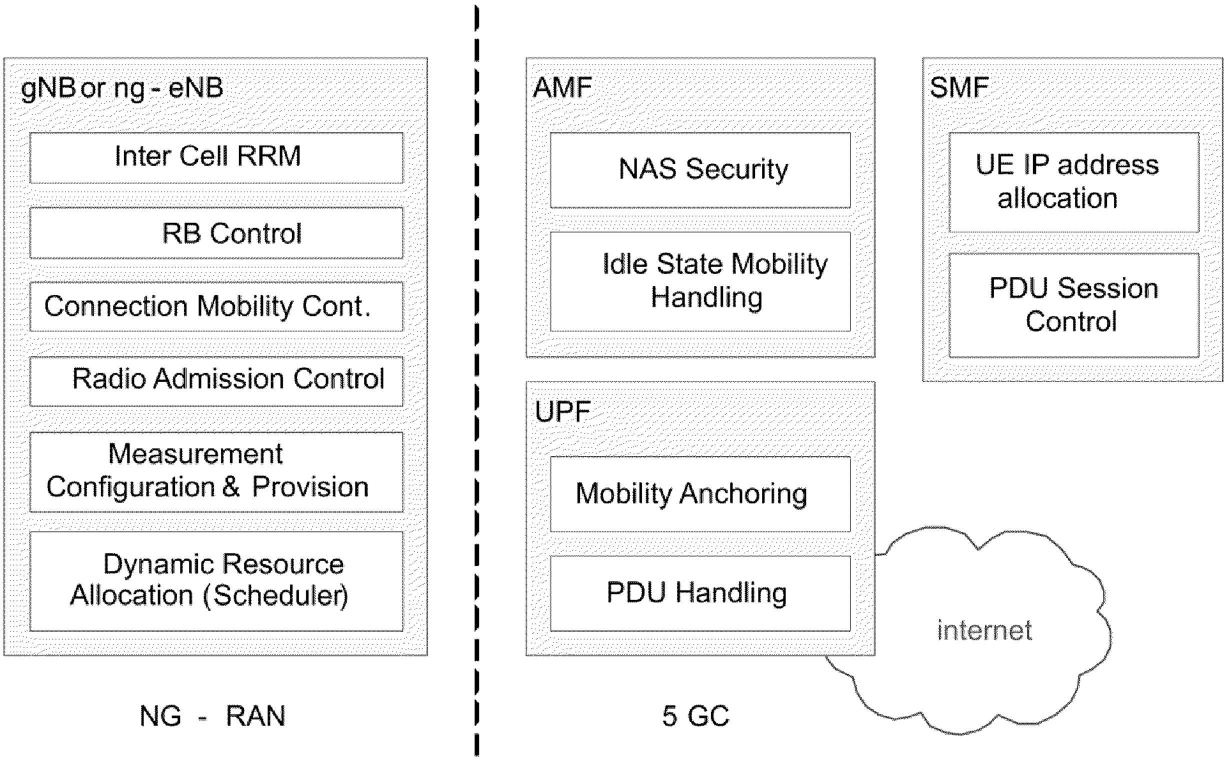
gNB or ng - eNB
Inter Cell RRM
RB Control
Connection Mobility Cont.
Radio Admission Control
Measurement Configuration & Provision
Dynamic Resource Allocation (Scheduler)
AMF
NAS Security
Idle State Mobility Handling
SMF
UE IP address allocation
PDU Session Control
UPF
Mobility Anchoring
PDU Handling
internet
NG - RAN
5 GC

FIG. 11

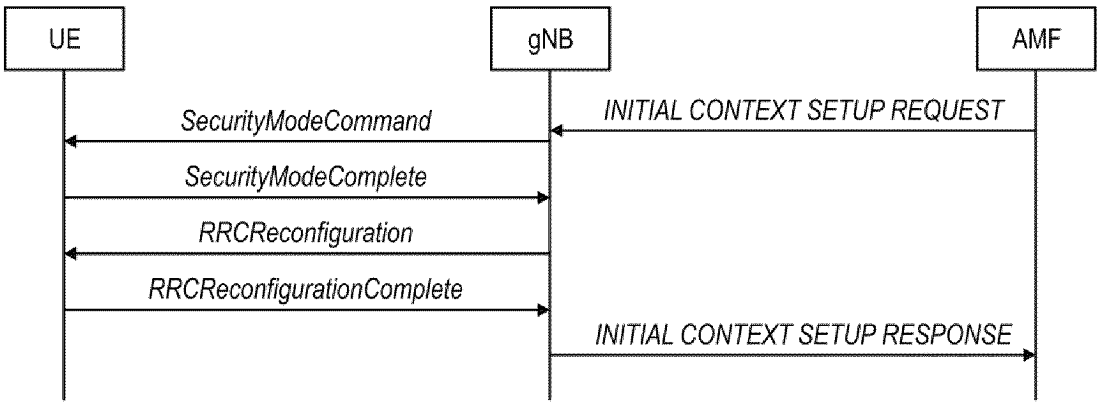
UE
gNB
AMF
INITIAL CONTEXT SETUP REQUEST
SecurityModeCommand
SecurityModeComplete
RRCReconfiguration
RRCReconfigurationComplete
INITIAL CONTEXT SETUP RESPONSE

FIG. 12

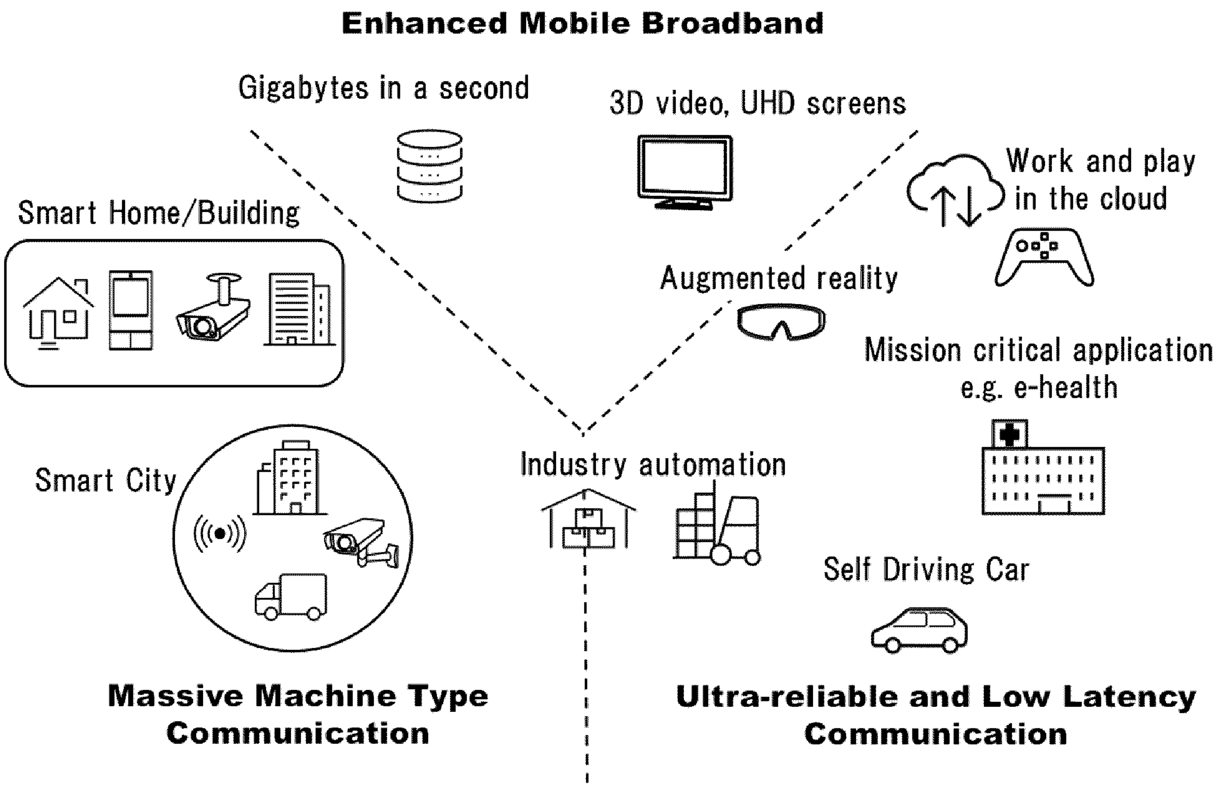
Enhanced Mobile Broadband
Gigabytes in a second
3D video, UHD screens
Smart Home/Building
Work and play in the cloud
Augmented reality
Mission critical application e.g. e-health
Smart City
Industry automation
Self Driving Car
Massive Machine Type Communication
Ultra-reliable and Low Latency Communication

FIG. 13

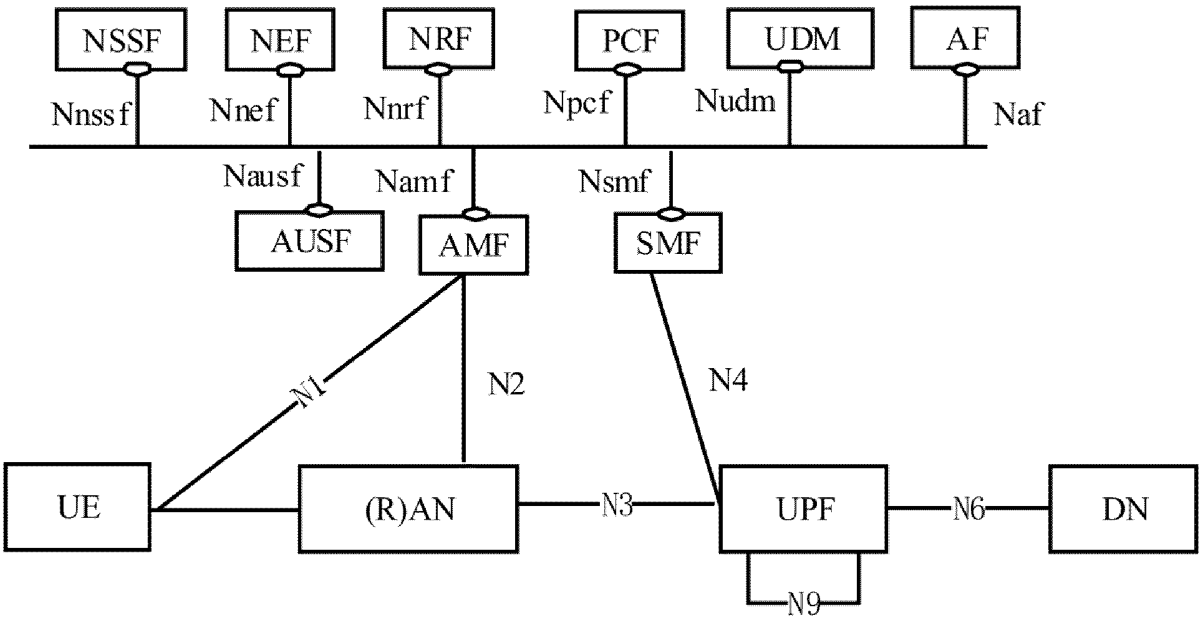
NSSF
NEF
NRF
PCF
UDM
AF
Nnssf
Nnef
Nnrf
Npcf
Nudm
Naf
Nausf
Namf
Nsmf
AUSF
AMF
SMF
N1
N2
N4
UE
(R)AN
N3
UPF
N6
DN
N9

FIG. 14

## INTERNATIONAL SEARCH REPORT

International application No.
**PCT/JP2023/031142**

### A. CLASSIFICATION OF SUBJECT MATTER

***H04W 74/08***(2009.01)i; ***H04W 16/28***(2009.01)i; ***H04W 56/00***(2009.01)i; ***H04W 64/00***(2009.01)i; ***H04W 72/02***(2009.01)i; ***H04W 72/21***(2023.01)i
FI: H04W74/08; H04W16/28; H04W56/00 130; H04W64/00 171; H04W72/02; H04W72/21

According to International Patent Classification (IPC) or to both national classification and IPC

### B. FIELDS SEARCHED

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-506120 A (IDAC HOLDINGS, INC) 17 January 2022 (2022-01-17) paragraphs [0063]-[0190] | 1-5, 7-10 |
| Y | paragraphs [0063]-[0190] | 6 |
| Y | US 2022/0070926 A1 (KYOCERA CORPORATION) 03 March 2022 (2022-03-03) paragraphs [0103]-[0111] | 6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/031142**

| Patent document cited in search report | Publication date (day/month/year) | Patent family member(s) | Publication date (day/month/year) |
| --- | --- | --- | --- |
| JP 2022-506120 A | 17 January 2022 | US 2021/0385879 A1<br>paragraphs [0072]-[0182]<br>WO 2020/092059 A1<br>EP 3874622 A1<br>CN 113196689 A | |
| US 2022/0070926 A1 | 03 March 2022 | JP 7218434 B2<br>paragraphs [0091]-[0098]<br>WO 2020/230866 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022158612 A

### Non-patent literature cited in the description


- Solutions for NR to support non-terrestrial networks (NTN) (Release 16). *3GPP, TR 38.821, V16.1.0*
- NR; Medium Access Control (MAC) protocol specification (Release 17). *3GPP, TS 38.321, V17.2.0*